# EUROPÄISCHE PATENTSCHRIFT

(11) **EP 3 749 470 B1**
(45) Veröffentlichungstag und Bekanntmachung des Hinweises auf die Patenterteilung: **25.05.2022**
(21) Anmeldenummer: 18738233.8
(22) Anmeldetag: 28.06.2018
(51) Int. Cl.: B22F 10/14, B22F 12/67, B22F 12/90, B28B 1/00, B33Y 10/00, B33Y 30/00, B33Y 50/02, B29C 64/393, B29C 64/227, B22F 12/00, B22F 10/30

(54) **3D-DRUCKER UND GENERATIVES FERTIGUNGSVERFAHREN**
3D PRINTER AND GENERATIVE MANUFACTURING PROCESS
IMPRIMANTE 3D ET PROCÉDÉ DE FABRICATION ADDITIVE

(30) Priorität: 07.02.2018 DE 102018102753
(43) Veröffentlichungstag der Anmeldung: 16.12.2020
(73) Patentinhaber: ExOne GmbH, 86368 Gersthofen (DE)
(72) Erfinder: MÜLLER, Alexander, 86420 Diedorf-Vogelsang (DE); BEDNARZ, Martin, 86567 Tandern (DE)
(74) Vertreter: Viering, Jentschura & Partner mbB Patent- und Rechtsanwälte
(86) Internationale Anmeldenummer: PCT/EP2018/067367
(87) Internationale Veröffentlichungsnummer: WO 2019/154528

(56) Entgegenhaltungen:
- WO-A1-2016/030405
- WO-A1-2016/119898
- DE-A1-102014 112 447
- US-A1- 2016 318 251
- US-A1- 2016 318 251
- US-A1- 2017 368 748

## Beschreibung

Die vorliegende Erfindung betrifft einen 3D-Drucker sowie ein generatives Fertigungsverfahren.

Es sind verschiedene Arten von generativen Fertigungsverfahren (und folglich verschiedene Arten von 3D-Druckern) bekannt.

Einige generative Fertigungsverfahren haben die folgenden Schritte gemeinsam:
(1) Es wird zunächst Partikelmaterial vollflächig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich selektiv verfestigt, zum Beispiel durch selektives Aufdrucken von Behandlungsmittel, zum Beispiel Bindemittel.
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht vollflächig aufgetragen wird (alternativ können zum Beispiel der Beschichter und die Druckvorrichtung jeweils um eine Schichtdicke angehoben werden).
(4) Schließlich kann das gefertigte Bauteil, das von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine solche Baubox ist zum Beispiel in DE 10 2009 056 696 A1 beschrieben.

In dem obigen Schritt (1) kommt in der Regel eine Beschichteranordnung mit einem Beschichter (auch "Recoater" genannt) zum Einsatz. Es sind unterschiedliche Beschichteranordnungen zur Verwendung in einem 3-Drucker bekannt, mit denen ein partikelförmiges Baumaterial in einer gleichmäßigen, vollflächigen Schicht auf das Baufeld (auch Baufläche oder Baubereich genannt) aufgebracht werden kann.

Eine Art von Beschichteranordnung verwendet zum Beispiel eine Walze (kurz "Walzen-Beschichter"), vor der zunächst eine Menge an partikelförmigem Baumaterial abgelegt wird und die anschließend (z.B. horizontal) über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Derartige Beschichteranordnungen eignen sich besonders für kleinere Baufelder und für eine kurze, von dem Beschichter zu überspannende Distanz.

Eine andere Art von Beschichteranordnung (sogenannte Beschichteranordnung mit "Behälter-Beschichter", zum Beispiel "Schlitz-Beschichter") verwendet einen Beschichter mit einem Behälter, der (z.B. horizontal) über ein Baufeld hinweg verfahrbar ist und einen inneren Hohlraum zur Aufnahme von partikelförmigem Baumaterial definiert, der in einer Öffnung zum Ausgeben des partikelförmigen Baumaterials auf das Baufeld mündet. Der Beschichter kann langgestreckt sein, um zum Beispiel die Länge oder Breite eines rechteckigen Baufelds zu überspannen bzw. abzudecken. Die Öffnung kann dann als Längsschlitz ausgebildet sein. Der Beschichter kann also (z.B. horizontal) über das Baufeld hinweg verfahren werden und dabei partikelförmiges Baumaterial aus der Öffnung heraus auf das Baufeld ausgeben, um dadurch eine gleichmäßige, vollflächige Schicht auf das Baufeld aufzubringen. Ein Beispiel für einen solchen Beschichter ist zum Beispiel in DE 10 2014 112 454 A1 beschrieben.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer Verfestigung der Baumaterial-Schicht in dem Teilbereich bei. Zum Beispiel kann das Behandlungsmittel ein Bindemittel sein, zum Beispiel eine Bindemittel-Komponente eines Mehrkomponenten-Bindemittels.

Unter partikelförmigem Baumaterial kann im Sinne dieser Anmeldung ein Baumaterial verstanden werden, welches zumindest eine Art von Partikelmaterial (zum Beispiel Sand(körner), zum Beispiel Gießereisand, und/oder Metallpartikel und/oder Kunststoffpartikel) aufweist. Es können auch mehrere unterschiedliche Arten von Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten.

Ein 3D-Drucker ist zum Beispiel aus der WO 2016/030405 A1 bekannt. Siehe dort zum Beispiel Figur 1. Der dort gezeigte 3D-Drucker kann gleichzeitig zwei Bauboxen aufnehmen und folglich zwei Baujobs (=generatives Fertigen von ein oder mehreren Bauteilen in einem zugeordneten Bauraum) parallel ausführen. Die beiden Bauräume sind rechteckig ausgebildet und entlang einer jeweiligen kurzen Seite benachbart zueinander angeordnet. Jede Baubox bzw. jeder Bauraum hat einen zugeordneten Beschichter, die senkrecht zu den langen Rechteckseiten laufen, und eine gemeinsame Druckvorrichtung, die senkrecht zu den kurzen Rechteckseiten läuft, bedient sowohl den ersten als auch den zweiten Bauraum. Gemäß WO 2016/030405 A1 können der oder die Baujobs infolge der besagten Anordnung von Beschichtern und gemeinsamer Druckvorrichtung schnell durchgeführt werden. Siehe dort den sich über die Seiten 5 und 6 erstreckenden Absatz sowie Seite 13, letzter Absatz. US 2016/318251 A1 betrifft ein 3D-Inkjet-Verfahren und eine Vorrichtung zur Herstellung dreidimensionaler Modelle bei erhöhten Prozessgeschwindigkeiten.

Die vorliegende Erfindung stellt einen 3D-Drucker nach Anspruch 1 und ein generatives Fertigungsverfahren nach Anspruch 5 bereit. Weitere erfindungsgemäße Ausgestaltungen sind in den jeweiligen abhängigen Ansprüchen beschrieben.

Gemäß verschiedenen, beispielgebenden Ausführungsformen der Erfindung können ein 3D-Drucker und ein generatives Fertigungsverfahren bereitgestellt werden, mit denen Bauteile von zweckmäßiger Qualität mit vertretbarem Aufwand in einer angemessenen Zeit herstellbar sind.

Gemäß verschiedenen, beispielgebenden Ausführungsformen der Erfindung können Bauteile von zweckmäßiger Qualität einfach, zuverlässig und schnell hergestellt werden.

Gemäß einem Aspekt (der als solcher nicht Teil der vorliegenden Erfindung ist, aber in Verbindung mit einem Multi-Bauraum-3D-Drucker (siehe unten) Teil der Erfindung ist) ist ein 3D-Drucker eingerichtet, um in einem Bauraum ein dreidimensionales Bauteil, z.B. eine Gussform oder einen Gießkern, schichtweise aufzubauen durch Ausbilden übereinanderliegender Baumaterial-Schichten von partikelförmigem Baumaterial, z.B. enthaltend Sandpartikel, und selektives Verfestigen mehrerer (in Dickenrichtung) aneinander angrenzender Baumaterial-Schichten in einem jeweiligen Teilbereich davon (entsprechend einer jeweiligen Schnittebene durch das zu fertigende Bauteil). Der Bauraum kann zum Beispiel von einer Bauplattform zumindest mitausgebildet/-definiert sein bzw. über dieser angeordnet sein, d.h. der 3D-Drucker kann zum Beispiel eine Bauplattform aufweisen, auf der das oder die Bauteile aufgebaut werden. Zusätzlich kann der Bauraum zum Beispiel von einer wie eingangs beschriebenen Baubox gebildet/definiert sein, d.h. der 3D-Drucker kann zum Beispiel eine wie eingangs beschriebene Baubox aufweisen. Der 3D-Drucker weist auf einen Beschichter, der in einer ersten Richtung (zum Beispiel erste Horizontalrichtung) über den Bauraum hinweg verfahrbar ist, um den Bauraum in Form einer gleichmäßigen Baumaterial-Schicht aus dem zu verfestigenden Baumaterial mit Baumaterial zu versorgen, und eine Druckvorrichtung, die in einer zweiten Richtung (zum Beispiel zweite Horizontalrichtung) über den Bauraum hinweg verfahrbar ist, um auf einen Teilbereich von einer zuvor aufgebrachten Baumaterial-Schicht ein fließfähiges Behandlungsmittel gesteuert auszugeben, welches zu einer selektiven Verfestigung derselben beiträgt. Zum Beispiel kann der Beschichter als sog. "Behälter-Beschichter" ausgebildet sein (siehe oben; Beschichter mit einem Behälter, der (z.B. horizontal) über den Bauraum hinweg verfahrbar ist und einen inneren Hohlraum zur Aufnahme von partikelförmigem Baumaterial definiert, der in einer Öffnung zum Ausgeben des partikelförmigen Baumaterials auf das Baufeld bzw. den Bauraum mündet), zum Beispiel als sog. "Schlitz-Beschichter", dessen Öffnung als länglicher Schlitz ausgebildet ist. Der 3D-Drucker weist ferner auf eine Steuervorrichtung, welche eingerichtet ist, den Beschichter und die Druckvorrichtung derart zu steuern, dass diese zeitlich überlappend über den Bauraum hinweg fahren und/oder dass diese überlappend den Bauraum mit Baumaterial versorgen bzw. auf einen Teilbereich von einer zuvor aufgebrachten Baumaterial-Schicht fließfähiges Behandlungsmittel gesteuert ausgeben.

Anschaulich kann gemäß der vorliegenden Erfindung bei einem 3D-Drucker durch Überlappung der Bewegung der Druckvorrichtung über den Bauraum hinweg mit der Bewegung des Beschichters über den Bauraum hinweg und/oder durch Überlappung der Versorgung des Bauraums mit Baumaterial mit der Ausgabe von fließfähigem Behandlungsmittel auf eine zuvor aufgebrachte Schicht die Zeit reduziert werden, die ein Baujob in Anspruch nimmt. Anders ausgedrückt können gemäß der vorliegenden Erfindung die Leistung und der Output des 3D-Druckers erhöht werden durch Bereitstellen einer Steuervorrichtung, welche eingerichtet ist, einen von der Druckvorrichtung ausgeführten Druckvorgang und einen von dem Beschichter ausgeführten Beschichtungsvorgang teilweise, zum Beispiel soweit wie möglich, zu parallelisieren. Somit überlappen oder überschneiden sich der Druckvorgang und der Beschichtungsvorgang gemäß der vorliegenden Erfindung, anders als im Stand der Technik, wo stets entweder gedruckt oder beschichtet wird, d.h. Beschichtungsvorgang und Druckvorgang sind im Stand der Technik zeitlich voneinander getrennt und folgen aufeinander. Wie stark ein Druckvorgang mit einem Beschichtungsvorgang parallelisiert wird bzw. wie groß die Überlappung ist, und wie viele der Druckvorgänge und Beschichtungsvorgänge letztendlich miteinander parallelisiert werden ist unter anderem abhängig von dem jeweiligen Anwendungsfall.

Mit anderen Worten wird in dem Bauraum erfindungsgemäß abschnittsweise/zeitweise gleichzeitig/parallel gedruckt und beschichtet. Zum Beispiel kann der Beschichter mit dem Auftragen einer Schicht beginnen, und nachdem der Beschichter ausreichend weit gefahren ist bzw. die Schicht in erster Richtung ausreichend weit aufgebracht wurde, kann "im Rücken des Beschichters" oder hinter demselben bereits ein erster Abschnitt der Schicht (sog. Druckabschnitt, zum Beispiel ein "erster Querstreifen") bedruckt werden, so dass nicht auf die Fertigstellung der kompletten Schicht gewartet werden muss. Hierzu kann die Druckvorrichtung zum Beispiel einen in der ersten Richtung segmentierten Druckkopf aufweisen, dessen Segmente (zum Beispiel je Druckabschnitt oder Druckstreifen ein Segment) separat in zweiter Richtung über den Bauraum hinweg verfahrbar sind, oder einen in erster Richtung versetzbaren Druckkopf aufweisen (siehe unten); allgemein kann die Druckvorrichtung also eingerichtet sein, den Bauraum bzw. eine zuvor aufgebrachte Schicht in mehreren Druckabschnitten selektiv zu bedrucken, die in der ersten Richtung gesehen hintereinander angeordnet sind und nacheinander abgefertigt werden, wobei ein jeweiliger Druckabschnitt entlang der zweiten Richtung von der Druckvorrichtung abgefahren wird. Alternativ kann aber auch der Beschichter im Rücken der Druckvorrichtung arbeiten, d.h. die Druckvorrichtung kann mit dem Bedrucken einer bereits vollständig aufgebrachten Schicht beginnen, und nachdem zum Beispiel ein erster Abschnitt der Schicht (entsprechend einem ersten Druckabschnitt) oder ein ausreichend großer Bereich von der Druckvorrichtung vollständig abgearbeitet wurde, kann der Beschichter mit dem Aufbringen einer neuen Schicht beginnen, d.h. den "frisch" bedruckten ersten Druckabschnitt beschichten.

Zum Beispiel kann die Steuervorrichtung den Beschichter und die Druckvorrichtung derart steuern, dass ein Überlappungsgrad von größer gleich 20% vorliegt, zum Beispiel größer gleich 25%, zum Beispiel größer gleich 30%, zum Beispiel größer gleich 35%, zum Beispiel größer gleich 40%, zum Beispiel größer gleich 45%, zum Beispiel größer gleich 50%, zum Beispiel größer gleich 55%, zum Beispiel größer gleich 60%. Der Überlappungsgrad kann zum Beispiel wie folgt berechnet werden: t_{B,D} / t_{B} * 100, wobei t_{B} die Zeit ist, die das Beschichten bzw. Aufbringen einer Schicht in Anspruch nimmt (also die Zeit, während der der Beschichter über den Bauraum hinweg fährt), und wobei t_{B,D} die Zeit ist, während der sowohl gedruckt wird als auch beschichtet wird bzw. während der der Beschichter und die Druckvorrichtung zeitlich überlappend über den Bauraum hinweg fahren (zum Beispiel inkl. möglicher Wendeabschnitte zwischen Einzelfahrten der Druckvorrichtung über den Bauraum hinweg, aber exkl. evtl. Wartezeiträume/Stoppzeiträume der Druckvorrichtung, während derer die Druckvorrichtung zwischen zwei Einzelfahrten stillsteht/ruht, um den Beschichter vorauseilen zu lassen). Wenn zum Beispiel die Druckvorrichtung (stetig) im Rücken des Beschichters arbeitet, kann der Überlappungsgrad zum Beispiel aus dem Quotienten der verbleibenden Beschichtungszeit ab Druckbeginn (Druckvorrichtung erreicht Bauraum, um diesen in zweiter Richtung zu überfahren) geteilt durch die gesamte Beschichtungszeit (für eine Schicht) berechnet werden. Wenn zum Beispiel der Beschichter im Rücken der Druckvorrichtung arbeitet, kann der Überlappungsgrad zum Beispiel aus dem Quotienten der verbleibenden Druckzeit ab Beschichtungsbeginn (Beschichter erreicht Bauraum, um diesen in erster Richtung zu überfahren) geteilt durch die gesamte Beschichtungszeit (für eine Schicht) berechnet werden.

Gemäß einer Ausführungsform (die als solche nicht Teil der Erfindung ist, aber in Verbindung mit einem Multi-Bauraum-3D-Drucker (siehe unten) Teil der Erfindung ist) kann bei dem 3D-Drucker die Druckvorrichtung einen Druckkopf aufweisen, der in der ersten Richtung versetzbar ist, wobei die Steuervorrichtung den Druckkopf zum selektiven Bedrucken einer Baumaterial-Schicht (bzw. zum selektiven Verfestigen einer Baumaterial-Schicht oder zum Bedrucken des jeweiligen Teilbereichs einer Schicht) mehrfach (in versetzter Art) in der zweiten Richtung über den Bauraum verfährt, zum Beispiel derart, dass der Druckkopf insgesamt mäanderförmig über den Bauraum hinweg verfahren wird (im Falle eines bidirektionalen Druckkopfes), zum Beispiel entlang eines U-förmigen Pfads (zusammengesetzt aus zwei Einzelfahrten) oder eines S-förmigen Pfads (drei Einzelfahren). Hierzu kann die Druckvorrichtung zum Beispiel einen Druckkopf-Träger aufweisen, der sich in der ersten Richtung erstreckt und an dem der Druckkopf bewegbar angebracht ist, wobei der Druckkopf-Träger wiederum an einer Linearführung angebracht sein kann, zum Beispiel an seinen beiden Endseiten, entlang welcher der Druckkopf-Träger in der zweiten Richtung über den Bauraum hinweg bewegbar ist. Dabei können durch das Versetzen des Druckkopfes in erster Richtung mehrere Druckabschnitte, zum Beispiel mehrere Druckstreifen, ausgebildet werden, die zum Beispiel parallel zueinander und in der ersten Richtung gesehen hintereinander angeordnet sein können. Die Steuervorrichtung kann dabei zum Beispiel eingerichtet sein, um die Druckabschnitte in der ersten Richtung gesehen an Randabschnitten zu überlappen.

Anschaulich kann gemäß dieser Ausführungsform (die als solche nicht Teil der Erfindung ist, aber in Verbindung mit einem Multi-Bauraum-3D-Drucker (siehe unten) Teil der Erfindung ist) ein Überlappungspotential effektiv ausgenutzt werden. Zum Beispiel kann anschaulich mit dem Drucken eines ersten Druckstreifens/Druckabschnitts begonnen werden, sobald der Beschichter ausreichend weit in der ersten Richtung verfahren wurde, d.h. über die Erstreckung des ersten Druckstreifens/Druckabschnitts in der ersten Richtung hinaus, oder der Beschichter kann umgekehrt über den Bauraum bewegt werden, nachdem der erste Druckstreifen/Druckabschnitt gedruckt wurde und bevor die Druckvorrichtung den Bauraum (bzw. den oder die restlichen Druckabschnitte) vollständig abgefahren hat.

Alternativ oder zusätzlich kann gemäß einer Ausführungsform (die als solche nicht Teil der Erfindung ist, aber in Verbindung mit einem Multi-Bauraum-3D-Drucker (siehe unten) Teil der Erfindung ist) bei dem 3D-Drucker eine von dem Beschichter zurückzulegende Strecke über den Bauraum hinweg entlang der ersten Richtung größer oder gleich einer Strecke sein, die von der Druckvorrichtung bei einmaliger Fahrt über den Bauraum hinweg entlang der zweiten Richtung zurückgelegt wird. Eine Einzelfahrt des Beschichters in erster Richtung über den Bauraum hinweg ist also größer gleich einer Einzelfahrt der Druckvorrichtung in zweiter Richtung über den Bauraum hinweg. Mit anderen Worten kann die Abmessung des Bauraums in erster Richtung größer gleich der Abmessung des Bauraums in zweiter Richtung sein. So kann der Bauraum in der Draufsicht zum Beispiel quadratisch oder rechteckig mit zwei langen und zwei kurzen Seiten ausgebildet sein. In letzterem Fall kann die Beschichter-Strecke einer langen Seite und die (einzelne) Druckvorrichtungs-Strecke einer kurzen Seite entsprechen.

Anschaulich kann gemäß dieser Ausführungsform ein Überlappungspotential besonders effektiv ausgennutzt werden, zum Beispiel in Kombination mit der zuvor beschriebenen Ausführungsform. Mit anderen Worten wird hierdurch eine Zerlegung des Druckbereichs in Druckabschnitte begünstigt, welche sich in erster Richtung gesehen hintereinander befinden.

Wenn die Anordnung von Beschichter und Druckvorrichtung derart gewählt ist, dass die von dem Beschichter zurückzulegende Strecke über das Baufeld größer oder gleich der von der Druckvorrichtung zurückzulegenden Strecke über das Baufeld ist, also invers zu der in WO 2016/030405 A1 beschriebenen Anordnung, bzw. eine Distanz oder Erstreckung des ersten Bauraums, die von dem Beschichter überfahren wird (entlang der ersten Richtung), größer oder gleich einer Distanz oder Erstreckung des Bauraums ist, die von der Druckvorrichtung überfahren wird (entlang der zweiten Richtung), kann gemäß verschiedenen Ausführungsformen hierdurch ermöglicht werden, dass eine zweckmäßige Qualität der herzustellenden Bauteile gewährleistet ist, zum Beispiel bei vertretbaren Kosten und/oder bei vertretbarer Komplexität, da der Beschichter über die längere Distanz läuft (jedenfalls nicht über die kürzere) und somit selbst die kürzere Distanz (jedenfalls nicht die längere) überspannen kann. Hierbei ist zu berücksichtigen, dass die jeweilige Länge/Distanz, die ein Beschichter ohne eine Beeinträchtigung der Bauteil-Qualität (zum Beispiel in Folge einer Durchbiegung des Beschichters oder einer Beschichter-Komponente, wie zum Beispiel einer Beschichter-Klinge zum Überstreichen von ausgegebenem Baumaterial) durchgängig überspannen kann (insbesondere bei vertretbaren Kosten und/oder bei vertretbarer Komplexität) in der Praxis begrenzt ist. Der Einsatz von mehreren Beschichtern für ein und denselben Bauraum kann hingegen problematisch sein, da das Aufbringen einer gleichmäßigen Schicht (insbesondere zwischen den beiden Beschichtern) dann unter Umständen nicht mehr möglich oder zumindest stark erschwert ist.

Zudem haben die Erfinder überraschend erkannt, dass das Verfahren des Beschichters über die längere Distanz (jedenfalls nicht über die kürzere) nicht zwangsläufig zu längeren Gesamtfertigungszeiten führen muss, sondern die vergleichsweise lange Strecke und Laufzeit des Beschichters dazu genutzt werden können, den Vorgang des Druckens und den Vorgang des Beschichtens in einer effektiven Art und Weise miteinander zu überlagern oder zu "parallelisieren".

Wie oben ausgeführt kann ein Druckkopf der Druckvorrichtung (die als solche nicht Teil der Erfindung ist, aber in Verbindung mit einem Multi-Bauraum-3D-Drucker (siehe unten) Teil der Erfindung ist) zum Beispiel entlang der ersten/langen Richtung segmentiert sein oder nur einen Teil des Baufelds entlang der ersten/langen Richtung abdecken, jedoch in der ersten Richtung versetzbar ausgebildet sein, wobei der Druckkopf oder ein Segment davon bereits dann in der zweiten Richtung über das Baufeld bewegt wird (entlang eines ersten Druckabschnitts), bevor der Beschichter seinen vollständigen Weg über das Baufeld zurückgelegt hat und nachdem der Beschichter eine ausreichende Strecke in der ersten Richtung gelaufen ist. Mit anderen Worten haben die Erfinder erkannt, dass ein Überlappungspotential der beiden Vorgänge Drucken und Beschichten mit der besagten Anordnung besonders groß ist. Die Erfinder haben also insofern ein Vorurteil überwunden (Verfahren des Beschichters entlang einer kurzen Richtung), wobei mit der besagten Anordnung unter vergleichbaren Bedingungen sogar kürzere Fertigungszeiten erzielbar sind als mit der inversen Anordnung, wenn das Überlappungspotential besonders effektiv ausgenutzt wird.

Alternativ oder zusätzlich kann gemäß einer Ausführungsform (die als solche nicht Teil der Erfindung ist, aber in Verbindung mit einem Multi-Bauraum-3D-Drucker (siehe unten) Teil der Erfindung ist) bei dem 3D-Drucker der Beschichter als bidirektionaler Beschichter ausgebildet sein und/oder die Druckvorrichtung als bidirektionale Druckvorrichtung ausgebildet sein. D.h., der Beschichter kann ausgebildet sein, um während einer Hinfahrt und einer Rückfahrt über den Bauraum hinweg (jeweils in der ersten Richtung) Baumaterial in Form einer gleichmäßigen Schicht auszugeben. Hierzu kann der Beschichter zum Beispiel als Behälter-Beschichter ausgebildet sein, der auf beiden Seiten der Öffnung (in erster Richtung) ein Streichelement (zum Beispiel Beschichter-Klinge) aufweist, dessen jeweiliger Anstellwinkel/Neigungswinkel zum Beispiel einstellbar ist. Von dem Streichelement kann zum Beispiel eine nach unten ausgerichtete Streichfläche ausgebildet sein, welche eingerichtet ist, um aus der Öffnung ausgegebenes Baumaterial zu überstreichen, um dadurch das ausgegebene Partikelmaterial zu nivellieren und/oder zu verdichten. Ein geeigneter Beschichter ist zum Beispiel in DE 10 2014 112 469 A1 beschrieben, deren Inhalt insofern durch Bezugnahme hierin aufgenommen ist.

Anschaulich kann gemäß dieser Ausführungsform die erforderliche Zeit für einen Baujob weiter reduziert sowie die Leistung und der Output des 3D-Druckers weiter gesteigert werden.

Alternativ oder zusätzlich können gemäß einer Ausführungsform (die als solche nicht Teil der Erfindung ist, aber in Verbindung mit einem Multi-Bauraum-3D-Drucker (siehe unten) Teil der Erfindung ist) bei dem 3D-Drucker
ein Ausgabebereich des Beschichters (zum Beispiel die Öffnung bzw. der Schlitz des Beschichters) in einer Richtung senkrecht zu der ersten Richtung und/oder in der zweiten Richtung den Bauraum vollständig überspannen, und/oder
ein Ausgabebereich eines/des Druckkopfes der Druckvorrichtung (zum Beispiel gebildet durch eine Mehrzahl von Druckdüsen des Druckkopfes) in einer Richtung senkrecht zu der zweiten Richtung und/oder in der ersten Richtung langgestreckt sein, und/oder
ein Ausgabebereich des Druckkopfes in einer Richtung senkrecht zu der zweiten Richtung und/oder in der ersten Richtung kürzer als der Bauraum (in dieser Richtung) und/oder kürzer als die von dem Beschichter zurückzulegende Strecke sein, zum Beispiel im Wesentlichen halb so groß wie oder kleiner als die von dem Beschichter zurückzulegende Strecke. Zum Beispiel kann die Länge des Ausgabebereichs des Druckkopfes in der ersten Richtung 65% oder weniger der Länge des Bauraums in erster Richtung betragen, zum Beispiel 60% oder weniger, zum Beispiel 55% oder weniger, zum Beispiel 50% oder weniger, zum Beispiel 45% oder weniger, zum Beispiel 40% oder weniger, zum Beispiel 35% oder weniger. Zum Beispiel kann die Länge des Ausgabebereichs des Druckkopfes in der ersten Richtung 10% oder mehr der Länge des Bauraums in erster Richtung betragen, zum Beispiel 15% oder mehr, zum Beispiel 20% oder mehr, zum Beispiel 25% oder mehr, zum Beispiel 30% oder mehr. Zum Beispiel kann die Länge des Ausgabebereichs des Druckkopfes in der ersten Richtung in einem Bereich von 65%-10% der Länge des Bauraums in erster Richtung liegen, zum Beispiel in einem Bereich von 60%-15%, zum Beispiel in einem Bereich von 55%-15%. Zum Beispiel kann der Ausgabebereich des Druckkopfes derart gewählt sein, dass er größer oder gleich einer Erstreckung eines jeweiligen Druckabschnitts (siehe oben) in erster Richtung ist, zum Beispiel etwas größer als ein jeweiliger Druckabschnitt, zum Beispiel um 20% größer, zum Beispiel um 15% größer, zum Beispiel um 10% größer, zum Beispiel um 5% größer. In diesem Fall werden für das Bedrucken eines Druckabschnitts nicht alle Druckdüsen des Druckkopfes benötigt, zum Beispiel nicht solche, die sich an einem Randabschnitt desselben befinden.

Alternativ oder zusätzlich können gemäß einer Ausführungsform (die als solche nicht Teil der Erfindung ist, aber in Verbindung mit einem Multi-Bauraum-3D-Drucker (siehe unten) Teil der Erfindung ist) bei dem 3D-Drucker
die erste Richtung und die zweite Richtung sich unter Ausbildung eines Winkels schneiden, zum Beispiel einem Winkel von im Wesentlichen 90° (im Wesentlichen kann dabei zum Beispiel bedeuten: +/- 25°, zum Beispiel +/- 20°, zum Beispiel +/-15°, zum Beispiel +/- 10°, zum Beispiel +/- 5°), und/oder
der Bauraum in der Draufsicht rechteckig ausgebildet sein, zum Beispiel mit zwei langen und zwei kurzen Seiten, wobei zum Beispiel die erste Richtung im Wesentlichen parallel (im Wesentlichen kann dabei zum Beispiel eine Abweichung von +/- 10° bedeuten, zum Beispiel +/- 5°) ist zu den langen Seiten des Bauraums, und/oder
die von dem Beschichter zurückzulegende Strecke größer als eine von der Druckvorrichtung zurückzulegende, einzelne Strecke über den Bauraum hinweg entlang der zweiten Richtung sein, zum Beispiel um mindestens den Faktor 1,2, zum Beispiel um mindestens den Faktor 1,3, zum Beispiel um mindestens den Faktor 1,4, zum Beispiel um mindestens den Faktor 1,5, und/oder
eine von der Druckvorrichtung zurückzulegende einzelne Strecke über den Bauraum hinweg entlang der zweiten Richtung 1,0m bis 1,4m, zum Beispiel 1,2m, sein.

Alternativ oder zusätzlich kann gemäß einer Ausführungsform (die als solche nicht Teil der Erfindung ist, aber in Verbindung mit einem Multi-Bauraum-3D-Drucker (siehe unten) Teil der Erfindung ist) bei dem 3D-Drucker die Steuervorrichtung eingerichtet sein, den Beschichter und die Druckvorrichtung, zum Beispiel den Druckkopf, ausgehend von derselben bzw. einer gemeinsamen, ersten Seite - in der ersten Richtung gesehen - über den Bauraum hinweg zu einer gegenüberliegenden, zweiten Seite - in der ersten Richtung gesehen - zu bewegen unter Ausgabe von Partikelmaterial bzw. fließfähigem Behandlungsmittel. Optional können anschließend der Beschichter und die Druckvorrichtung ausgehend von der zweiten Seite zurück zu der ersten Seite bewegt werden unter erneuter Ausgabe von Partikelmaterial bzw. fließfähigem Behandlungsmittel (zum Beispiel, wenn der Beschichter bidirektional betrieben wird). Diese Vorgänge können wiederholt werden, zum Beispiel mehrmals.

Der Druckkopf bzw. die Druckvorrichtung (der/die als solche/r nicht Teil der Erfindung ist, aber in Verbindung mit einem Multi-Bauraum-3D-Drucker (siehe unten) Teil der Erfindung ist) kann zum Beispiel in vertikaler Richtung mit Abstand zu dem Beschichter angeordnet und in einer separaten Ebene, zum Beispiel Horizontalebene, verfahrbar sein.

Die Steuervorrichtung kann zum Beispiel eingerichtet sein, um den Druckkopf bzw. die Druckvorrichtung mit höherer Geschwindigkeit zu verfahren/bewegen als den Beschichter (als solches nicht Teil der Erfindung, aber in Verbindung mit einem Multi-Bauraum-3D-Drucker (siehe unten) Teil der Erfindung).

Der Beschichter und die Druckvorrichtung bzw. der Druckkopf (die als solche nicht Teil der Erfindung sind, aber in Verbindung mit einem Multi-Bauraum-3D-Drucker (siehe unten) Teil der Erfindung sind) können zum Beispiel voneinander mechanisch entkoppelt und/oder separat verfahrbar sein. Der Beschichter kann zum Beispiel in die erste Richtung verfahrbar sein, während die Druckvorrichtung bzw. der Druckkopf gleichzeitig in die zweite Richtung verfahrbar ist.

Der Beschichter kann zum Beispiel entlang einer Beschichter-Linearführungsstruktur verfahrbar sein, zum Beispiel mittels eines Schlittens, an dem der Beschichter befestigt ist.

Ein selektives Verfestigen von mehreren aneinander angrenzenden Baumaterial-Schichten in einem jeweiligen Teilbereich davon kann zum Beispiel durch Binderjetting erfolgen, d.h. durch (selektives) Verkleben des (partikelförmigen) Baumaterials mit einem Binder.

Das oben beschriebene Prinzip gemäß einem ersten Aspekt (der als solcher nicht Teil der Erfindung ist) lässt sich auch anwenden auf und ist besonders geeignet für einen sog. Multi-Bauraum-3D-Drucker, zum Beispiel einen 3D-Drucker mit zwei, drei oder mehr benachbarten Bauräumen, der Teil der Erfindung ist, wie in den beigefügten Ansprüchen definiert.

Gemäß einem weiteren, zweiten Aspekt, der Teil der vorliegenden Erfindung ist, ist insofern ein 3D-Drucker (Multi-Bauraum-3D-Drucker) bereitgestellt, der eingerichtet ist, um in einem ersten Bauraum und in einem dazu benachbarten (zum Beispiel mit Abstand dazu angeordneten) zweiten Bauraum jeweils ein oder mehrere dreidimensionale Bauteile schichtweise aufzubauen, wobei dem ersten Bauraum ein erster Beschichter und dem zweiten Bauraum ein zweiter Beschichter zugeordnet ist, die in einer ersten Richtung (zum Beispiel erste Horizontalrichtung) über den ersten Bauraum bzw. in einer zu der ersten Richtung im Wesentlichen parallelen (im Wesentlichen kann dabei zum Beispiel eine Abweichung von +/- 10° bedeuten, zum Beispiel +/- 5°) dritten Richtung (zum Beispiel dritte Horizontalrichtung) über den zweiten Bauraum hinweg verfahrbar sind, um den jeweiligen Bauraum in Form einer gleichmäßigen Baumaterial-Schicht aus dem zu verfestigenden Baumaterial mit Baumaterial zu versorgen. Der jeweilige Bauraum kann zum Beispiel über einer zugehörigen Bauplattform angeordnet sein bzw. von einer solchen (mit)ausgebildet/definiert sein, ggf. zusammen mit einer zugehörigen Baubox (siehe oben), und der jeweilige Beschichter kann zum Beispiel von einem Behälter-Beschichter (siehe oben) gebildet sein, zum Beispiel einem Schlitzbeschichter. Zum Beispiel können der erste und der zweite Beschichter separat bzw. unabhängig voneinander betreibbar sein. Der 3D-Drucker hat ferner eine gemeinsame (d.h. eine von den beiden Bauräumen geteilte bzw. eine beide Bauräume bedienende) Druckvorrichtung, die in einer zweiten Richtung (zum Beispiel zweite Horizontalrichtung), welche zu der ersten und der dritten Richtung in einem Winkel angeordnet ist (zum Beispiel jeweils in einem Winkel von im Wesentlichen 90°), über den ersten Bauraum und den zweiten Bauraum hinweg verfahrbar ist, um auf einen Teilbereich von einer zuvor aufgebrachten Baumaterial-Schicht des ersten Bauraums und einen Teilbereich von einer zuvor aufgebrachten Baumaterial-Schicht des zweiten Bauraums ein fließfähiges Behandlungsmittel gesteuert auszugeben. Der 3D-Drucker hat ferner eine Steuervorrichtung, die eingerichtet ist, um den ersten Beschichter, den zweiten Beschichter und die gemeinsame Druckvorrichtung derart zu steuern, dass eine Fahrt des ersten Beschichters in erster Richtung über den ersten Bauraum hinweg und eine Fahrt des zweiten Beschichters in dritter Richtung über den zweiten Bauraum hinweg mit mindestens einer von einer Fahrt der Druckvorrichtung in zweiter Richtung über den ersten Bauraum und einer Fahrt der Druckvorrichtung in zweiter Richtung über den zweiten Bauraum hinweg zeitlich überlappen, und/oder dass die Versorgung mit Baumaterial des ersten Bauraums durch den ersten Beschichter und die Versorgung mit Baumaterial des zweiten Bauraums durch den zweiten Beschichter mit der gesteuerten Ausgabe von fließfähigem Behandlungsmittel auf eine zuvor aufgebrachte Baumaterial-Schicht von mindestens einem von dem ersten Bauraum und dem zweiten Bauraum zeitlich überlappen. Zum Beispiel kann die Steuervorrichtung eingerichtet sein, den ersten Beschichter und den zweiten Beschichter im Wesentlichen nebeneinander/parallelisiert/gleichzeitig über den ersten Bauraum bzw. den zweiten Bauraum zu verfahren (im Wesentlichen kann dabei zum Beispiel bedeuten, dass eine zeitliche Überlappung von größer gleich 90% gegeben ist, zum Beispiel größer gleich 95%). Ein Ausgabebereich des ersten Beschichters überspannt in einer Richtung senkrecht zu der ersten Richtung den ersten Bauraum vollständig. Ein Ausgabebereich des zweiten Beschichters überspannt in einer Richtung senkrecht zu der dritten Richtung den zweiten Bauraum vollständig. Eine von dem ersten Beschichter zurückzulegende Strecke über den ersten Bauraum hinweg entlang der ersten Richtung ist größer oder gleich einer von der Druckvorrichtung zurückzulegenden (Einzel-)Strecke über den ersten Bauraum hinweg entlang der zweiten Richtung. Eine von dem zweiten Beschichter zurückzulegende Strecke über den zweiten Bauraum hinweg entlang der dritten Richtung ist größer oder gleich einer von der Druckvorrichtung zurückzulegenden (Einzel-)Strecke über den zweiten Bauraum hinweg entlang der zweiten Richtung.

Mit anderen Worten kann gemäß diesem Aspekt der Erfindung abschnittsweise/ zeitweise gleichzeitig/parallel in dem ersten Bauraum beschichtet, in dem zweiten Bauraum beschichtet und in einem von dem ersten und dem zweiten Bauraum gedruckt werden. D.h., der von der gemeinsamen Druckvorrichtung vorgenommene Druckvorgang wird parallelisiert mit den beiden Beschichtungsvorgängen. Hierzu kann analog der Beschreibung für den ersten Aspekt die Druckvorrichtung im Rücken der beiden Beschichter arbeiten, oder die beiden Beschichter können im Rücken der Druckvorrichtung arbeiten. Zum Beispiel kann die gemeinsame Druckvorrichtung eingerichtet sein, um den ersten Bauraum und den zweiten Bauraum in mehreren Druckabschnitten selektiv zu bedrucken, die in der ersten Richtung gesehen hintereinander angeordnet sind und nacheinander abgefertigt werden, wobei ein jeweiliger Druckabschnitt entlang der zweiten Richtung von der Druckvorrichtung abgefahren wird und sich über sowohl den ersten als auch den zweiten Bauraum hinweg erstreckt.

Das weiter oben beschriebene Überlappungsprinzip kann also auf zwei (oder mehr; es sollte verständlich sein, dass die Anzahl der Bauräume beliebig erweiterbar ist) benachbarte Bauräume angewendet werden und dabei mit einer gemeinsamen Druckvorrichtung (die sämtlichen Bauräumen dient) und zwei Beschichtern (bzw. einem Beschichter je Bauraum) realisiert werden, um Komponenten einzusparen bzw. eine Kostenersparnis zu erzielen.

Zum Beispiel kann die Steuervorrichtung den ersten Beschichter, den zweiten Beschichter und die gemeinsame Druckvorrichtung derart steuern, dass auch gemäß dieser Ausführungsform ein Überlappungsgrad von größer gleich 20% vorliegt, zum Beispiel größer gleich 25%, zum Beispiel größer gleich 30%, zum Beispiel größer gleich 35%, zum Beispiel größer gleich 40%, zum Beispiel größer gleich 45%, zum Beispiel größer gleich 50%, zum Beispiel größer gleich 55%, zum Beispiel größer gleich 60%. Der Überlappungsgrad kann zum Beispiel wie folgt berechnet werden: t_{B,D} / t_{B} * 100, wobei t_{B} die Zeit ist, die das Beschichten in den beiden/sämtlichen Bauräumen in Anspruch nimmt (also die Zeit, während der der erste Beschichter und der zweite Beschichter über den jeweiligen Bauraum hinweg fahren, um eine Schicht aufzubringen), und wobei t_{B,D} die Zeit ist, während der sowohl gedruckt wird als auch beschichtet wird bzw. während der die Beschichter und die Druckvorrichtung zeitlich überlappend über den Bauraum hinweg fahren (zum Beispiel inkl. möglicher Wendeabschnitte zwischen Einzelfahrten der Druckvorrichtung über den Bauraum hinweg). Wenn zum Beispiel die Druckvorrichtung im Rücken der Beschichter arbeitet, kann der Überlappungsgrad zum Beispiel aus dem Quotienten der verbleibenden Beschichtungszeit ab Druckbeginn (Druckvorrichtung erreicht Bauraum, um diesen in zweiter Richtung zu überfahren) geteilt durch die gesamte Beschichtungszeit (bis in dem ersten und dem zweiten Bauraum jeweils eine vollständige Schicht aufgebracht ist) berechnet werden. Wenn zum Beispiel der Beschichter im Rücken der Druckvorrichtung arbeitet, kann der Überlappungsgrad zum Beispiel aus dem Quotienten der verbleibenden Druckzeit ab Beschichtungsbeginn (Zeitpunkt, ab dem der erste Beschichter und der zweite Beschichter ihren jeweils zugehörigen Bauraum erreicht haben, um diesen in erster Richtung zu überfahren) geteilt durch die gesamte Beschichtungszeit berechnet werden. Analog lässt sich auch ein Überlappungsgrad berechnen für den Fall eines dritten Bauraums mit drittem Beschichter, eines vierten Bauraums mit viertem Beschichter, eines fünften Bauraums mit fünften Beschichter, etc.

Gemäß diesem Aspekt der vorliegenden Anmeldung können die Leistung und der Output des 3D-Druckers weiter gesteigert werden unter Aufrechterhaltung einer zweckmäßigen Bauteilqualität und bei vertretbaren Kosten.

Generell gilt das für den ersten Aspekt Gesagte analog auch für den Multi-Bauraum-3D-Drucker.

So können zum Beispiel gemäß einer Ausführungsform bei dem 3D-Drucker (Multi-Bauraum-3D-Drucker)
die Druckvorrichtung einen Druckkopf aufweisen, der in der ersten Richtung versetzbar ist, wobei die Steuervorrichtung eingerichtet ist, um den Druckkopf zum selektiven Bedrucken einer Baumaterial-Schicht des ersten Bauraums und einer Baumaterial-Schicht des zweiten Bauraums mehrfach/wiederholt (in versetzter Art) in der zweiten Richtung (nacheinander) über den ersten und den zweiten Bauraum zu verfahren, zum Beispiel derart, dass der Druckkopf insgesamt mäanderförmig über den ersten und den zweiten Bauraum hinweg verfährt, zum Beispiel entlang eines U-förmigen Pfads oder eines S-förmigen Pfads, (die Druckvorrichtung kann zum Beispiel wie für den ersten Aspekt beschrieben konfiguriert sein, wobei der Druckkopf-Träger entlang der Linearführung in der zweiten Richtung über den ersten und den zweiten Bauraum hinweg verfahrbar ist) und/oder
eine von dem ersten Beschichter zurückzulegende Strecke über den ersten Bauraum hinweg entlang der ersten Richtung mindestens um dem Faktor 1,2 größer der von der Druckvorrichtung zurückzulegenden (Einzel-)Strecke über den ersten Bauraum hinweg entlang der zweiten Richtung sein, bzw. die Abmessung des ersten Bauraums in erster Richtung kann größer oder gleich der Abmessung des ersten Bauraums in zweiter Richtung sein, (wie für den ersten Aspekt im Detail beschrieben wirkt sich diese Anordnung letztendlich günstig aus auf die Bauteilqualität, die Kosten, die Komplexität und die Dauer des gesamten Herstellungsprozesses) und/oder
eine von dem zweiten Beschichter zurückzulegende Strecke über den zweiten Bauraum hinweg entlang der dritten Richtung mindestens um den Faktor 1,2 größer der von der Druckvorrichtung zurückzulegenden (Einzel-)Strecke über den zweiten Bauraum hinweg entlang der zweiten Richtung sein, bzw. die Abmessung des zweiten Bauraums in dritter Richtung kann größer oder gleich der Abmessung des zweiten Bauraums in zweiter Richtung sein, (wie für den ersten Aspekt im Detail beschrieben wirkt sich diese Anordnung letztendlich günstig aus auf die Bauteilqualität, die Kosten, die Komplexität und die Dauer des gesamten Herstellungsprozesses) und/oder
der erste Beschichter und der zweite Beschichter jeweils als bidirektionaler Beschichter ausgebildet sein und/oder die gemeinsame Druckvorrichtung als bidirektionale Druckvorrichtung ausgebildet sein.

Alternativ oder zusätzlich können zum Beispiel gemäß einer Ausführungsform bei dem 3D-Drucker (Multi-Bauraum-3D-Drucker)
der erste Bauraum und der zweite Bauraum im Wesentlichen die gleiche Form und Größe haben und/oder
der erste Bauraum und der zweite Bauraum in der zweiten Richtung gesehen hintereinander angeordnet sein und/oder
der erste Bauraum und der zweite Bauraum jeweils rechteckig ausgebildet sein, zum Beispiel mit zwei langen und zwei kurzen Seiten, wobei der erste und der zweite Bauraum mit zwei langen Seiten benachbart zueinander angeordnet sind und/oder wobei die erste Richtung und die dritte Richtung im Wesentlichen parallel sind zu den langen Seiten des ersten Bauraums bzw. den langen Seiten des zweiten Bauraums (im Wesentlichen kann dabei zum Beispiel eine Abweichung von +/- 10° bedeuten, zum Beispiel +/- 5°), und/oder
ein Ausgabebereich eines Druckkopfes der Druckvorrichtung in einer Richtung senkrecht zu der zweiten Richtung und/oder in der ersten Richtung langgestreckt sein, und/oder
ein Ausgabebereich des Druckkopfes in einer Richtung senkrecht zu der zweiten Richtung und/oder in der ersten Richtung kürzer als der erste Bauraum und/oder kürzer als die von dem ersten Beschichter zurückzulegende Strecke sein, zum Beispiel im Wesentlichen halb so groß oder kleiner, (siehe auch die weiteren Ausführungen zum ersten Aspekt, die gleichermaßen für diesen Aspekt gelten) und/oder
eine von der Druckvorrichtung zurückzulegende einzelne Strecke über den ersten Bauraum hinweg entlang der zweiten Richtung 1,0m bis 1,4m, zum Beispiel 1,2m, sein und/oder
eine von der Druckvorrichtung zurückzulegende einzelne Strecke über den zweiten Bauraum hinweg entlang der zweiten Richtung 1,0m bis 1,4m, zum Beispiel 1,2m, sein und/oder
die Steuervorrichtung eingerichtet sein, den ersten Beschichter, den zweiten Beschichter und die gemeinsame Druckvorrichtung, zum Beispiel den Druckkopf, ausgehend von einer gemeinsamen, ersten Seite - in der ersten und dritten Richtung gesehen - über den ersten und zweiten Bauraum hinweg zu einer gegenüberliegenden, zweiten Seite - in der ersten und dritten Richtung gesehen - zu bewegen unter Ausgabe von Partikelmaterial bzw. fließfähigem Behandlungsmittel, und wobei optional anschließend der erste Beschichter, der zweite Beschichter und die gemeinsame Druckvorrichtung, zum Beispiel den Druckkopf, ausgehend von der zweiten Seite zurück zu der ersten Seite bewegt werden unter erneuter Ausgabe von Partikelmaterial bzw. fließfähigem Behandlungsmittel.

Der gemeinsame Druckkopf kann zum Beispiel in vertikaler Richtung mit Abstand zu dem ersten Beschichter und dem zweiten Beschichter angeordnet und in einer separaten Ebene, zum Beispiel Horizontalebene, verfahrbar sein.

Der gemeinsame Druckkopf kann zum Beispiel von der Steuervorrichtung mit höherer Geschwindigkeit (zum Beispiel Höchstgeschwindigkeit und/oder Durchschnittsgeschwindigkeit) verfahren werden als der jeweilige Beschichter.

Gemäß einer erfinderischen Ausführungsform kann zum Beispiel der 3D-Drucker (Multi-Bauraum-3D-Drucker) ferner einen dritten Bauraum, der benachbart zu dem zweiten Bauraum angeordnet ist, und einen dritten Beschichter aufweisen, der dem dritten Bauraum zugeordnet ist und entlang einer zu der ersten Richtung im Wesentlichen parallelen vierten Richtung über den dritten Bauraum hinweg verfahrbar ist, um den dritten Bauraum in Form einer gleichmäßigen Baumaterial-Schicht aus dem zu verfestigenden Baumaterial mit Baumaterial zu versorgen. Der 3D-Drucker kann zum Beispiel eingerichtet sein, um in dem dritten Bauraum ein oder mehrere dreidimensionale Bauteile schichtweise aufzubauen. Die gemeinsame Druckvorrichtung kann zum Beispiel in der zweiten Richtung über den dritten Bauraum hinweg verfahrbar sein, um auf einen Teilbereich von einer zuvor aufgebrachten Baumaterial-Schicht des dritten Bauraums ein fließfähiges Behandlungsmittel gesteuert auszugeben. Ein Ausgabebereich des dritten Beschichters kann zum Beispiel in einer Richtung senkrecht zu der vierten Richtung den dritten Bauraum vollständig überspannen. Eine von dem dritten Beschichter zurückzulegende Strecke über den dritten Bauraum hinweg entlang der vierten Richtung kann zum Beispiel größer oder gleich einer von der Druckvorrichtung zurückzulegenden (Einzel-)Strecke über den dritten Bauraum hinweg entlang der zweiten Richtung sein, zum Beispiel mindestens größer um den Faktor 1,2, bzw. die Abmessung des dritten Bauraums in vierter Richtung kann zum Beispiel größer oder gleich der Abmessung des dritten Bauraums in zweiter Richtung sein, (wie für den ersten Aspekt im Detail beschrieben wirkt sich diese Anordnung letztendlich günstig aus auf die Bauteilqualität, die Kosten, die Komplexität und die Dauer des gesamten Herstellungsprozesses). Die Steuervorrichtung kann zum Beispiel eingerichtet sein, um den ersten Beschichter, den zweiten Beschichter, den dritten Beschichter und die gemeinsame Druckvorrichtung derart zu steuern, dass eine jeweilige Fahrt der Beschichter über den zugehörigen Bauraum hinweg mit der Fahrt der gemeinsamen Druckvorrichtung in zweiter Richtung über mindestens einen der Bauräume hinweg zeitlich überlappt, und/oder dass die Versorgung mit Baumaterial des jeweiligen Bauraums durch den zugehörigen Beschichter mit der gesteuerten Ausgabe von fließfähigem Behandlungsmittel auf eine zuvor aufgebrachte Baumaterial-Schicht von mindestens einem der Bauräume zeitlich überlappt.

Für einen solchen 3D-Drucker (Multi-Bauraum-3D-Drucker) mit drei Bauräumen und drei Beschichtern gilt analog das oben für einen 3D-Drucker mit einem Bauraum und einem Beschichter bzw. für einen 3D-Drucker mit zwei Bauräumen und zwei Beschichtern gesagte.

Der dritte Bauraum kann zum Beispiel wie der erste und/oder zweite Bauraum ausgestaltet sein. Der dritte Beschichter kann zum Beispiel wie der erste und/oder zweite Beschichter ausgestaltet sein. Der dritte Beschichter kann zum Beispiel als bidirektionaler Beschichter ausgebildet sein. Die gemeinsame Druckvorrichtung kann zum Beispiel als bidirektionale Druckvorrichtung ausgebildet sein. Der erste Bauraum, der zweite Bauraum und der dritte Bauraum können zum Beispiel im Wesentlichen die gleiche Form und Größe haben. Der erste Bauraum, der zweite Bauraum und der dritte Bauraum können zum Beispiel in der zweiten Richtung gesehen hintereinander angeordnet sein. Der erste Bauraum, der zweite Bauraum und der dritte Bauraum können zum Beispiel jeweils rechteckig ausgebildet sein, zum Beispiel mit zwei langen und zwei kurzen Seiten, wobei zum Beispiel der erste und der zweite Bauraum mit zwei langen Seiten benachbart zueinander angeordnet sind und der zweite und der dritte Bauraum mit zwei langen Seiten benachbart zueinander angeordnet sind und/oder wobei zum Beispiel die erste Richtung, die dritte Richtung und die vierte Richtung im Wesentlichen parallel sind zu den langen Seiten des ersten Bauraums bzw. den langen Seiten des zweiten Bauraums bzw. den langen Seiten des dritten Bauraums (im Wesentlichen kann dabei zum Beispiel eine Abweichung von +/- 10° bedeuten, zum Beispiel +/- 5°). Die Steuervorrichtung kann zum Beispiel eingerichtet sein, um den ersten Beschichter, den zweiten Beschichter, den dritten Beschichter und die gemeinsame Druckvorrichtung, zum Beispiel den Druckkopf, ausgehend von einer gemeinsamen, ersten Seite - in der ersten, dritten und vierten Richtung gesehen - über den ersten, zweiten und dritten Bauraum hinweg zu einer gegenüberliegenden, zweiten Seite - in der ersten, dritten und vierten Richtung gesehen - zu bewegen unter Ausgabe von Partikelmaterial bzw. fließfähigem Behandlungsmittel, wobei optional anschließend der erste Beschichter, der zweite Beschichter, der dritte Beschichter und die gemeinsame Druckvorrichtung, zum Beispiel der Druckkopf, ausgehend von der zweiten Seite zurück zu der ersten Seite bewegt werden unter erneuter Ausgabe von Partikelmaterial bzw. fließfähigem Behandlungsmittel.

Die Druckvorrichtung kann zum Beispiel einen Druckkopf aufweisen, der in der ersten Richtung versetzbar ist, wobei die Steuervorrichtung eingerichtet ist, um den Druckkopf zum selektiven Bedrucken einer Baumaterial-Schicht des ersten Bauraums, einer Baumaterial-Schicht des zweiten Bauraums und einer Baumaterial-Schicht des dritten Bauraums mehrfach/wiederholt (in versetzter Art) in der zweiten Richtung (nacheinander) über den ersten, den zweiten und den dritten Bauraum hinweg zu verfahren, zum Beispiel derart, dass der Druckkopf insgesamt mäanderförmig über den ersten, den zweiten und den dritten Bauraum hinweg verfährt, zum Beispiel entlang eines U-förmigen Pfads oder eines S-förmigen Pfads, (die Druckvorrichtung kann zum Beispiel wie für den ersten Aspekt beschrieben konfiguriert sein, wobei der Druckkopf-Träger entlang der Linearführung in der zweiten Richtung über den ersten, den zweiten und den dritten Bauraum hinweg verfahrbar ist).

Der gemeinsame Druckkopf kann zum Beispiel in vertikaler Richtung mit Abstand zu dem ersten Beschichter, dem zweiten Beschichter und dem dritten Beschichter angeordnet und in einer separaten Ebene, zum Beispiel Horizontalebene, verfahrbar sein. Der gemeinsame Druckkopf kann zum Beispiel von der Steuervorrichtung mit höherer Geschwindigkeit (zum Beispiel Höchstgeschwindigkeit und/oder Durchschnittsgeschwindigkeit) verfahren werden als die jeweiligen Beschichter.

Es versteht sich, dass der 3D-Drucker (Multi-Bauraum-3D-Drucker) zum Beispiel um einen vierten Bauraum und einen vierten Beschichter oder um n Bauräume und n Beschichter, wobei n eine natürliche Zahl ist, ergänzt/erweitert werden kann. Für einen solchen Multi-Bauraum-3D-Drucker mit vier oder mehr Bauräumen und vier oder mehr Beschichtern gilt analog das oben für einen 3D-Drucker mit einem, zwei bzw. drei Bauräumen und Beschichtern gesagte.

Die Beschichter (zum Beispiel der erste Beschichter und/oder der zweite Beschichter und/oder der dritte Beschichter) und die gemeinsame Druckvorrichtung bzw. der gemeinsame Druckkopf können zum Beispiel voneinander mechanisch entkoppelt und/oder separat verfahrbar sein. Die Beschichter (zum Beispiel der erste Beschichter und/oder der zweite Beschichter und/oder der dritte Beschichter) können zum Beispiel in die jeweilige Richtung (zum Beispiel erste Richtung und/oder dritte Richtung und/oder vierte Richtung) verfahrbar sein, während die Druckvorrichtung bzw. der Druckkopf gleichzeitig in die zweite Richtung verfahrbar ist.

Die Beschichter (zum Beispiel der erste Beschichter und/oder der zweite Beschichter und/oder der dritte Beschichter) können zum Beispiel entlang einer Beschichter-Linearführungsstruktur verfahrbar sein, zum Beispiel mittels eines oder mehrerer Schlitten, an denen der bzw. die Beschichter befestigt sind.

Die Beschichter (zum Beispiel der erste Beschichter und/oder der zweite Beschichter und/oder der dritte Beschichter) können zum Beispiel gleichzeitig (zum Beispiel parallel, zum Beispiel nebeneinander) und/oder gemeinsam über den jeweils zugeordneten Bauraum hinweg verfahrbar sein. Die Beschichter (zum Beispiel der erste Beschichter und/oder der zweite Beschichter und/oder der dritte Beschichter) können zum Beispiel mit gleicher Geschwindigkeit über den jeweils zugeordneten Bauraum hinweg verfahrbar sein. Die Fahrt der Beschichter (zum Beispiel des ersten Beschichters und/oder des zweiten Beschichters und/oder des dritten Beschichters) über den jeweils zugeordneten Bauraum hinweg kann zum Beispiel gleichzeitig beginnen und/oder gleichzeitig enden.

Die Beschichter (zum Beispiel der erste Beschichter und/oder der zweite Beschichter und/oder der dritte Beschichter) können zum Beispiel mechanisch miteinander gekoppelt und/oder verbunden sein.

Ein schichtweises Aufbauen von ein oder mehreren dreidimensionalen Bauteilen in einem Bauraum kann zum Beispiel durch selektives Verfestigen von mehreren aneinander angrenzenden Baumaterial-Schichten in einem jeweiligen Teilbereich davon erfolgen, zum Beispiel durch Binderjetting, d.h. durch (selektives) Verkleben des (partikelförmigen) Baumaterials mit einem Bindemittel.

Gemäß einem weiteren, dritten Aspekt (der als solcher nicht Teil der vorliegenden Erfindung ist, aber in Bezug auf einen Multi-Bauraum-3D-Drucker (siehe unten) Teil der Erfindung ist) ist ein generatives Fertigungsverfahren zum Herstellen mindestens eines dreidimensionalen Bauteils, z.B. einer Gussform oder einem Gießkern, in einem Bauraum eines 3D-Druckers (zum Beispiel einem 3D-Drucker gemäß dem ersten Aspekt) bereitgestellt. Das Verfahren weist auf: Ausbilden übereinanderliegender Schichten von partikelförmigem Baumaterial, z.B. enthaltend Sandpartikel, unter Verwendung eines Beschichters, der zum Aufbringen einer jeweiligen Schicht in einer ersten Richtung über den Bauraum hinweg verfahren wird, und selektives Bedrucken ein oder mehrerer aneinander angrenzender Baumaterial-Schichten in einem jeweiligen Teilbereich davon unter Verwendung einer Druckvorrichtung, die in einer zweiten Richtung über den Bauraum hinweg verfahren wird, um auf einen Teilbereich von einer zuvor aufgebrachten Baumaterial-Schicht ein fließfähiges Behandlungsmittel gesteuert auszugeben, welches zu einer selektiven Verfestigung derselben beiträgt. Dabei werden bei dem Verfahren der Beschichter und die Druckvorrichtung zeitlich überlappend über den Bauraum hinwegbewegt und/oder der Beschichter und die Druckvorrichtung versorgen den Bauraum überlappend mit Baumaterial bzw. mit fließfähigem Behandlungsmittel.

Mit anderen Worten wird bei dem Verfahren zeitweise gleichzeitig gedruckt und beschichtet, d.h. Druckvorgang (selektives Bedrucken einer Schicht) und Beschichtungsvorgang (Aufbringen einer Schicht) sind teilweise parallelisiert. Zum Beispiel kann hierzu eine in erster Richtung noch nicht vollständig aufgebrachte Schicht bereits unter Verwendung der Druckvorrichtung bedruckt werden, d.h. der Druckvorgang kann beginnen, bevor der Beschichtungsvorgang abgeschlossen ist, oder alternativ kann mit einem (nächsten) Beschichtungsvorgang begonnen werden, bevor eine zuvor aufgebrachte Schicht vollständig bedruckt wurde. Das selektive Bedrucken einer jeweiligen Schicht kann wie oben beschrieben unter Ausbildung von Druckabschnitten erfolgen, die in der ersten Richtung gesehen hintereinander angeordnet sind und nacheinander abgefertigt werden, wobei für einen jeweiligen Druckabschnitt die Druckvorrichtung entlang der zweiten Richtung über den Bauraum bewegt wird.

Gemäß einer Ausführungsform (die als solche nicht Teil der Erfindung ist, aber in Bezug auf einen Multi-Bauraum-3D-Drucker (siehe unten) Teil der Erfindung ist) können/kann bei dem generativen Fertigungsverfahren
die Druckvorrichtung einen Druckkopf aufweisen, der in der ersten Richtung versetzbar ist, wobei der Druckkopf zum selektiven Bedrucken einer Baumaterial-Schicht mehrfach (in versetzter Art) in der zweiten Richtung über den Bauraum verfahren wird, zum Beispiel derart, dass der Druckkopf insgesamt mäanderförmig über den Bauraum hinweg fährt, zum Beispiel entlang eines U-förmigen Pfads oder eines S-förmigen Pfads, und/oder
eine von dem Beschichter zurückzulegende Strecke über den Bauraum hinweg entlang der ersten Richtung größer oder gleich einer Strecke sein, die von der Druckvorrichtung bei einmaliger Fahrt über den Bauraum hinweg entlang der zweiten Richtung zurückgelegt wird, (zum Beispiel kann das Beschichten bzw. Ausbilden einer Schicht entlang einer Strecke erfolgen, die größer gleich einer Strecke ist, entlang welcher das Drucken eines Druckabschnitts in zweiter Richtung erfolgt) und/oder
als Beschichter ein bidirektionaler Beschichter eingesetzt werden bzw. mittels des Beschichters während einer Hinfahrt in erster Richtung und während einer Rückfahrt in erster Richtung partikelförmiges Baumaterial ausgegeben werden und/oder als Druckvorrichtung eine bidirektionale Druckvorrichtung eingesetzt werden bzw. mittels der Druckvorrichtung während einer Hinfahrt in zweiter Richtung und während einer Rückfahrt in zweiter Richtung fließfähiges Behandlungsmittel ausgeben werden,
und/oder der Beschichter und der Druckkopf ausgehend von einer gemeinsamen, ersten Seite - in der ersten Richtung gesehen - über den Bauraum hinweg zu einer gegenüberliegenden, zweiten Seite - in der ersten Richtung gesehen - bewegt werden unter Ausgabe von Partikelmaterial bzw. fließfähigem Behandlungsmittel, wobei optional anschließend der Beschichter und der Druckkopf ausgehend von der zweiten Seite zurück zu der ersten Seite bewegt werden unter erneuter Ausgabe von Partikelmaterial bzw. fließfähigem Behandlungsmittel.

Alternativ oder zusätzlich kann/können gemäß einer Ausführungsform (die als solche nicht Teil der Erfindung ist, aber in Bezug auf einen Multi-Bauraum-3D-Drucker (siehe unten) Teil der Erfindung ist) bei dem generativen Fertigungsverfahren
ein Ausgabebereich des Beschichters in einer Richtung senkrecht zu der ersten Richtung und/oder in der zweiten Richtung den Bauraum vollständig überspannen, und/oder
ein Ausgabebereich eines Druckkopfes der Druckvorrichtung in einer Richtung senkrecht zu der zweiten Richtung und/oder in der ersten Richtung langgestreckt sein, und/oder
ein Ausgabebereich des Druckkopfes in einer Richtung senkrecht zu der zweiten Richtung und/oder in der ersten Richtung kürzer als der Bauraum und/oder kürzer als die von dem Beschichter zurückzulegende Strecke sein, zum Beispiel im Wesentlichen halb so groß oder kleiner, und/oder
die erste Richtung und die zweite Richtung sich unter Ausbildung eines Winkels schneiden, zum Beispiel einem Winkel von im Wesentlichen 90°, und/oder
der Bauraum in der Draufsicht rechteckig ausgebildet sein, zum Beispiel mit zwei langen und zwei kurzen Seiten, wobei zum Beispiel die erste Richtung im Wesentlichen parallel ist zu den langen Seiten des Bauraums, und/oder
die von dem Beschichter zurückzulegende Strecke größer als eine von der Druckvorrichtung zurückzulegende, einzelne Strecke über den Bauraum hinweg entlang der zweiten Richtung sein, zum Beispiel um mindestens den Faktor 1,2, und/oder
eine von der Druckvorrichtung zurückzulegende einzelne Strecke über den Bauraum hinweg entlang der zweiten Richtung 1,0m bis 1,4m, zum Beispiel 1,2m, sein.

Gemäß einem weiteren, vierten Aspekt, der Teil der vorliegenden Erfindung ist, ist ein generatives Fertigungsverfahren zum Herstellen mindestens eines dreidimensionalen Bauteils, z.B. einer Gussform oder einem Gießkern, in einem ersten Bauraum eines 3D-Druckers (zum Beispiel 3D-Drucker gemäß dem zweiten Aspekt) und mindestens eines dreidimensionalen Bauteils, z.B. einer Gussform oder einem Gießkern, in einem zweiten Bauraum des 3D-Druckers, der benachbart zu dem ersten Bauraum angeordnet ist, bereitgestellt, wobei das Verfahren aufweist:
Ausbilden übereinanderliegender Schichten von partikelförmigem Baumaterial, z.B. enthaltend Sandpartikel, in dem ersten Bauraum unter Verwendung eines ersten Beschichters, der zum Aufbringen einer jeweiligen Schicht in einer ersten Richtung über den ersten Bauraum hinweg verfahren wird,
Ausbilden übereinanderliegender Schichten von partikelförmigem Baumaterial, z.B. enthaltend Sandpartikel, in dem zweiten Bauraum unter Verwendung eines zweiten Beschichters, der zum Aufbringen einer jeweiligen Schicht in einer zu der ersten Richtung im Wesentlichen parallelen dritten Richtung über den zweiten Bauraum hinweg verfahren wird, und
selektives Bedrucken mehrerer aneinander angrenzender Baumaterial-Schichten in einem jeweiligen Teilbereich davon in dem ersten Bauraum und selektives Bedrucken mehrerer aneinander angrenzender Baumaterial-Schichten in einem jeweiligen Teilbereich davon in dem zweiten Bauraum unter Verwendung einer gemeinsamen Druckvorrichtung, die in einer zweiten Richtung, welche zu der ersten und der dritten Richtung in einem Winkel angeordnet ist, über den ersten Bauraum und den zweiten Bauraum hinweg verfahren wird, um auf einen Teilbereich von einer zuvor aufgebrachten Baumaterial-Schicht in dem ersten Bauraum und auf einen Teilbereich von einer zuvor aufgebrachten Baumaterial-Schicht in dem zweiten Bauraum ein fließfähiges Behandlungsmittel gesteuert auszugeben, welches zu einer selektiven Verfestigung der jeweiligen Baumaterial-Schicht beiträgt.

Dabei werden bei dem Verfahren eine Fahrt des ersten Beschichters in erster Richtung über den ersten Bauraum hinweg und eine Fahrt des zweiten Beschichters in dritter Richtung über den zweiten Bauraum hinweg mit mindestens einer von einer Fahrt der gemeinsamen Druckvorrichtung in zweiter Richtung über den ersten Bauraum hinweg und einer Fahrt der gemeinsamen Druckvorrichtung in zweiter Richtung über den zweiten Bauraum hinweg zeitlich überlappend ausgeführt werden, und/oder die Versorgung mit Baumaterial des ersten Bauraums durch den ersten Beschichter und die Versorgung mit Baumaterial des zweiten Bauraums durch den zweiten Beschichter werden zeitlich überlappend ausgeführt mit der gesteuerten Ausgabe von fließfähigem Behandlungsmittel auf eine zuvor aufgebrachte Baumaterial-Schicht von mindestens einem von dem ersten Bauraum und dem zweiten Bauraum.

Mit anderen Worten wird gemäß diesem Aspekt der Erfindung zeitweise gleichzeitig in dem ersten Bauraum beschichtet, in dem zweiten Bauraum beschichtet und in einem von dem ersten und dem zweiten Bauraum gedruckt. D.h., der von der gemeinsamen Druckvorrichtung vorgenommene Druckvorgang wird parallelisiert mit den beiden Beschichtungsvorgängen.

Gemäß einer Ausführungsform kann/können bei dem generativen Fertigungsverfahren
die gemeinsame Druckvorrichtung einen gemeinsamen Druckkopf aufweisen, der in der ersten Richtung versetzbar ist, wobei der gemeinsame Druckkopf zum selektiven Bedrucken einer Baumaterial-Schicht des ersten Bauraums und einer Baumaterial-Schicht des zweiten Bauraums mehrfach in der zweiten Richtung über den ersten und den zweiten Bauraum verfahren wird, zum Beispiel derart, dass der Druckkopf insgesamt mäanderförmig über den ersten und den zweiten Bauraum hinweg verfährt, zum Beispiel entlang eines U-förmigen Pfads oder eines S-förmigen Pfads, und/oder
eine von dem ersten Beschichter zurückgelegte Strecke über den ersten Bauraum hinweg entlang der ersten Richtung größer oder gleich einer von der Druckvorrichtung zurückgelegten (Einzel-)Strecke über den ersten Bauraum hinweg entlang der zweiten Richtung sein, zum Beispiel mindestens größer um den Faktor 1,2, und/oder
eine von dem zweiten Beschichter zurückgelegte Strecke über den zweiten Bauraum hinweg entlang der dritten Richtung größer oder gleich einer von der Druckvorrichtung zurückgelegten (Einzel-)Strecke über den zweiten Bauraum hinweg entlang der zweiten Richtung sein, zum Beispiel mindestens größer um den Faktor 1,2, und/oder
der erste Beschichter und der zweite Beschichter jeweils als bidirektionaler Beschichter betrieben werden und/oder die Druckvorrichtung als bidirektionale Druckvorrichtung betrieben werden und/oder
der erste Bauraum und der zweite Bauraum im Wesentlichen die gleiche Form und Größe haben und/oder
der erste Bauraum und der zweite Bauraum in der zweiten Richtung gesehen hintereinander angeordnet sein und/oder
der erste Bauraum und der zweite Bauraum jeweils rechteckig ausgebildet sein, zum Beispiel mit zwei langen und zwei kurzen Seiten, wobei der erste und der zweite Bauraum mit zwei langen Seiten benachbart zueinander angeordnet sind und/oder wobei die erste Richtung und die dritte Richtung im Wesentlichen parallel sind zu den langen Seiten des ersten bzw. des zweiten Bauraums, und/oder
ein Ausgabebereich des ersten Beschichters in einer Richtung senkrecht zu der ersten Richtung und/oder in der zweiten Richtung den ersten Bauraum vollständig überspannen, und/oder
ein Ausgabebereich des zweiten Beschichters in einer Richtung senkrecht zu der dritten Richtung und/oder in der zweiten Richtung den zweiten Bauraum vollständig überspannen, und/oder
ein Ausgabebereich eines Druckkopfes der Druckvorrichtung in einer Richtung senkrecht zu der zweiten Richtung und/oder in der ersten Richtung langgestreckt sein, und/oder
ein Ausgabebereich des Druckkopfes in einer Richtung senkrecht zu der zweiten Richtung und/oder in der ersten Richtung kürzer als der erste Bauraum und/oder kürzer als die von dem ersten Beschichter zurückzulegende Strecke sein, zum Beispiel im Wesentlichen halb so groß oder kleiner, und/oder
eine von der Druckvorrichtung zurückzulegende einzelne Strecke über den ersten Bauraum hinweg entlang der zweiten Richtung 1,0m bis 1,4m, zum Beispiel 1,2m, sein und/oder
eine von der Druckvorrichtung zurückzulegende einzelne Strecke über den zweiten Bauraum hinweg entlang der zweiten Richtung 1,0m bis 1,4m, zum Beispiel 1,2m, sein und/oder
der erste Beschichter, der zweite Beschichter und der Druckkopf ausgehend von einer gemeinsamen, ersten Seite - in der ersten und dritten Richtung gesehen - über den ersten und zweiten Bauraum hinweg zu einer gegenüberliegenden, zweiten Seite - in der ersten und dritten Richtung gesehen -bewegt werden unter Ausgabe von Partikelmaterial bzw. fließfähigem Behandlungsmittel, und wobei optional anschließend der erste Beschichter, der zweite Beschichter und der Druckkopf ausgehend von der zweiten Seite zurück zu der ersten Seite bewegt werden unter erneuter Ausgabe von Partikelmaterial bzw. fließfähigem Behandlungsmittel.

Weitere Merkmale und Vorteile der vorliegenden Erfindung sind ersichtlich aus oder im Detail dargelegt in der angehängten Zeichnung, welche hierin mitaufgenommen ist, sowie der folgenden detaillierten Beschreibung, welche zusammen dazu dienen, bestimmte Prinzipien der vorliegenden Erfindung zu erläutern.

Die Erfindung wird im Folgenden anhand verschiedener Ausführungsformen mit Bezugnahme auf die Zeichnung näher erläutert. In der Zeichnung zeigen:
Figur 1 eine schematische Ansicht eines 3D-Druckers gemäß einer ersten Ausführungsform (nicht Teil der Erfindung).
Figur 2 eine weitere schematische Ansicht des 3D-Druckers gemäß der ersten Ausführungsform (nicht Teil der Erfindung).
Figur 3 eine schematische Ansicht eines 3D-Druckers gemäß einer zweiten Ausführungsform, welche Teil der Erfindung ist.
Die Figuren 4 und 5 schematische Ansichten eines 3D-Druckers gemäß einer dritten Ausführungsform, welche Teil der Erfindung ist.

In der folgenden ausführlichen Beschreibung wird auf die beigefügte Zeichnung Bezug genommen, die einen Teil dieser bildet und in der zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

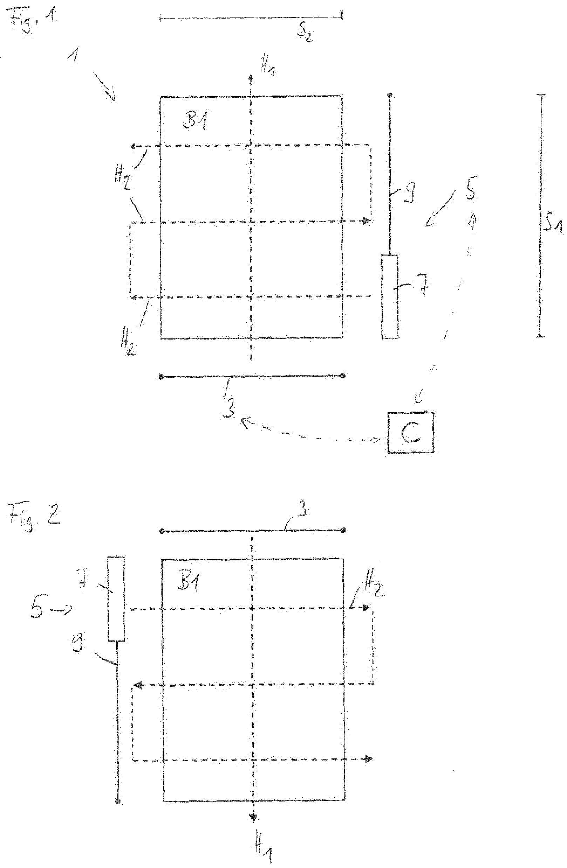

Die **Figuren 1 und 2** zeigen jeweils eine schematische Ansicht eines 3D-Druckers 1 gemäß einer ersten Ausführungsform (nicht Teil der Erfindung).

Wie in Figur 1 (nicht Teil der Erfindung) gezeigt, weist der 3D-Drucker 1 gemäß der ersten Ausführungsform einen Bauraum B1 auf, der zum Beispiel über einer nicht gezeigten Bauplattform angeordnet sein kann, welche zum Beispiel höhenverstellbar ausgebildet sein kann. Der Bauraum B1 kann dabei umfangseitig frei/unbegrenzt sein (in diesem Fall können die auf die Bauplattform aufgebrachten Schichten bzw. deren Randbereiche den Bauraum umfangsseitig definieren) oder von einer vertikalen Wandstruktur begrenzt sein, welche zum Beispiel von einer sog. Baubox gebildet sein kann, zum Beispiel von einer stationären oder verfahrbaren Baubox. Der Bauraum B1 ist hier in der Draufsicht beispielgebend rechteckig ausgebildet, mit zwei langen Seiten und zwei kurzen Seiten.

Der 3D-Drucker 1 ist eingerichtet, um in dem Bauraum B1 mindestens ein dreidimensionales Bauteil, z.B. eine Gussform oder einen Gießkern, schichtweise aufzubauen durch Ausbilden übereinanderliegender Baumaterial-Schichten von partikelförmigem Baumaterial, z.B. enthaltend Sandpartikel, und selektives Verfestigen von mehreren aneinander angrenzenden Baumaterial-Schichten in einem jeweiligen Teilbereich davon.

Der 3D-Drucker 1 weist hierzu einen Beschichter 3, der in einer ersten Richtung H₁ über den Bauraum B1 hinweg verfahrbar ist, um den Bauraum B1 in Form einer vollflächigen, gleichmäßigen Baumaterial-Schicht aus dem zu verfestigenden Baumaterial mit Baumaterial zu versorgen, sowie eine Druckvorrichtung 5 auf, die in einer zweiten Richtung H₂ über den Bauraum B1 hinweg verfahrbar ist, um auf einen Teilbereich von einer zuvor aufgebrachten Baumaterial-Schicht ein fließfähiges Behandlungsmittel gesteuert auszugeben, welches zu einer selektiven Verfestigung derselben beiträgt. Die erste Richtung und die zweite Richtung schneiden sich hier beispielgebend unter einem Winkel von 90°.

Der Beschichter 3 ist hier beispielgebend in Gestalt eines Behälter-Beschichters und/oder als bidirektionaler Beschichter ausgebildet, der sowohl während einer Hinfahrt in erster Richtung (Fig.1) als auch während einer Rückfahrt in erster Richtung (Fig. 2) eine gleichmäßige Baumaterial-Schicht aus dem zu verfestigenden Baumaterial auftragen kann. Der Behälter-Beschichter 3 weist eine Öffnung bzw. einen Schlitz auf (nicht gezeigt), der sich in zweiter Richtung H₂ über den gesamten Bauraum B1 hinweg erstreckt, so dass der Ausgabebereich des Beschichters den Bauraum in der zweiten Richtung vollständig überspannt/abdeckt. Zudem ist der Beschichter 3 entlang einer (nicht gezeigten) Linearführung in der ersten Richtung H₁ über den Bauraum B1 hinweg verfahrbar. Ein geeigneter Beschichter ist zum Beispiel in der DE 10 2014 112 469 A1 oder WO 2016/030375 A2 beschrieben, auf die insofern Bezug genommen wird und deren Offenbarungsgehalt insofern durch Bezugnahme hierin mitaufgenommen ist.

Die Druckvorrichtung 5 ist hier beispielgebend als bidirektionale Druckvorrichtung ausgebildet, die sowohl während einer Hinfahrt in zweiter Richtung (unterster, waagrechter Pfeil in Fig.1) als auch während einer Rückfahrt in zweiter Richtung (mittlerer, waagrechter Pfeil in Fig. 1) eine Baumaterial-Schicht bzw. einen Druckabschnitt davon selektiv bedrucken kann. Weitere Details der Druckvorrichtung 5 sind weiter unten beschrieben.

Die Erstreckung des Bauraums B1 in zweiter Richtung ist mit S₂ gekennzeichnet und entspricht hier einer kurzen Rechteckseite, und die Erstreckung des Bauraums B1 in erster Richtung ist mit S₁ gekennzeichnet und entspricht hier einer langen Rechteckseite. Somit wird gemäß dieser Ausführungsform entlang der langen Seite beschichtet und entlang der kurzen Seite gedruckt, d.h. die von dem Beschichter 3 zurückzulegende Strecke S₁ über den Bauraum B1 hinweg entlang der ersten Richtung H₁ ist größer als die Strecke S₂, die von der Druckvorrichtung 5 bei einmaliger Fahrt über den Bauraum B1 hinweg entlang der zweiten Richtung H₂ zurückgelegt wird.

Der 3D-Drucker 1 weist ferner eine Steuervorrichtung C auf, welche mit dem Beschichter 3 und der Druckvorrichtung 5 verbunden ist bzw. kommuniziert und welche eingerichtet ist, um den Beschichter 3 und die Druckvorrichtung 5 derart zu steuern, dass diese zeitlich überlappend über den Bauraum B1 hinweg fahren und/oder dass diese überlappend den Bauraum B1 mit Baumaterial versorgen bzw. auf einen Teilbereich von einer zuvor aufgebrachten Baumaterial-Schicht fließfähiges Behandlungsmittel gesteuert ausgeben. Ein Überlappungsgrad kann hier zum Beispiel eingestellt werden auf einen Wert von größer gleich 30%, zum Beispiel größer gleich 40%, zum Beispiel größer gleich 50%.

Hierzu wird die zu bedruckende Schicht in mehrere Druckabschnitte unterteilt (hier drei), die in erster Richtung gesehen hintereinander angeordnet sind und nacheinander von der Druckvorrichtung 5 abgearbeitet werden (jeweils in zweiter Richtung), so dass die Druckvorrichtung 5 insgesamt mehrmals in zweiter Richtung H₂ über den Bauraum hinweg fährt.

Gemäß dieser beispielgebenden Ausführungsform weist die Druckvorrichtung 5 einen Druckkopf 7 auf, der in der ersten Richtung H₁ versetzbar ist, zum Beispiel entlang einer Trägerstruktur 9, die selbst wiederum entlang einer (nicht gezeigten) Linearführung in der zweiten Richtung H₂ über das Baufeld B1 hinweg verfahrbar ist. Die Steuervorrichtung C ist dabei eingerichtet, um den Druckkopf 7 zum selektiven Bedrucken einer Baumaterial-Schicht mehrfach, in versetzter Art in der zweiten Richtung H₂ über den Bauraum B1 zu verfahren, hier derart, dass der Druckkopf 7 insgesamt mäanderförmig über den Bauraum B1 hinweg verfahren wird, hier entlang eines (spiegelverkehrten) S-förmigen Pfads bzw. eines Pfads mit drei parallelen Einzelstrecken in zweiter Richtung. Der Druckkopf 7 bzw. ein Ausgabebereich desselben ist hier in erster Richtung H₁ langgestreckt, jedoch kürzer ausgebildet als die Erstreckung S₁ des Bauraums B1 in erster Richtung, und kann zum Beispiel eine Länge von 30%-40% der Erstreckung S₁ haben.

Anhand einer Gesamtschau der Figuren 1 und 2 (nicht Teil der Erfindung) soll im Folgenden das Arbeitsprinzip des 3D-Drucker 1 verdeutlicht werden.

Zunächst wird - wie in Figur 1 angedeutet- der Beschichter 3, ausgehend von seiner in Figur 1 gezeigten Position ("unten") in der ersten Richtung H₁ über den Bauraum B1 hinweg verfahren, um den Bauraum B1 in Form einer gleichmäßigen Baumaterial-Schicht aus dem zu verfestigenden Baumaterial mit Baumaterial zu versorgen. Noch bevor der Beschichter den Bauraum B1 vollständig überfahren hat und vor Erreichen der in Figur 2 gezeigten Position ("oben") des Beschichters 3, zum Beispiel wenn der Beschichter 3 im Wesentlichen die Mitte des Bauraums B1 in erster Richtung erreicht hat, wird der Druckkopf 7, ausgehend von seiner in Figur 1 gezeigten Position ("unten rechts"), in der zweiten Richtung H₂ über den Bauraum B1 hinweg verfahren (unterer, waagrechter Pfeil H₂ in Figur 1), um auf einen ersten/unteren Druckabschnitt der von dem Beschichter 3 aufgebrachten Baumaterial-Schicht fließfähiges Behandlungsmittel gesteuert auszugeben, welches zu einer selektiven Verfestigung der Schicht bzw. des Druckabschnitts beiträgt. Das Verfahren des Druckkopfes 7 erfolgt dabei durch Verfahren der Trägerstruktur 9 entlang der (nicht gezeigten) Linearführung. Das Verfahren des Druckkopfes 7 kann dabei grundsätzlich beginnen, sobald der Beschichter 3 den ersten Druckabschnitt passiert hat. Anschließend wird der Druckkopf 7 in der ersten Richtung H₁ versetzt, so dass er bzgl. des Trägers 9 mittig angeordnet ist, und daraufhin wird der Druckkopf 7 mittels des Trägers 9 erneut in der zweiten Richtung H₂ über den Bauraum B1 hinweg verfahren (mittlerer, waagrechter Pfeil H₂ in Figur 1), um auf einen zweiten/mittleren Druckabschnitt der Baumaterial-Schicht fließfähiges Behandlungsmittel gesteuert auszugeben. Anschließend wird der Druckkopf 7 erneut in der ersten Richtung versetzt, so dass er bzgl. des Trägers 9 oben angeordnet ist, und daraufhin wird der Druckkopf 7 erneut in der zweiten Richtung H₂ über den Bauraum B1 hinweg verfahren (oberer, waagrechter Pfeil H₂ in Figur 1), um auf einen dritten/oberen Druckabschnitt der Baumaterial-Schicht fließfähiges Behandlungsmittel gesteuert auszugeben. Während dem beschriebenen Verfahren und Versetzen des Druckkopfes 7 wird der Beschichter 3 weiter in erster Richtung verfahren, um das Aufbringen der Schicht abzuschließen. Somit arbeitet der Druckkopf "im Rücken" des Beschichters 3, und die Steuervorrichtung C ist eingerichtet, den Beschichter 3 und die Druckvorrichtung 5 bzw. den Druckkopf 7, ausgehend von einer gemeinsamen, ersten/unteren Seite - in der ersten Richtung gesehen - (siehe Figur 1) über den Bauraum hinweg zu einer gegenüberliegenden, zweiten/oberen Seite - in der ersten Richtung gesehen - zu bewegen (siehe Figur 2) unter Ausgabe von Partikelmaterial bzw. fließfähigem Behandlungsmittel.

Nachdem die von dem Beschichter 3 aufgebrachte Schicht vollständig von der Druckvorrichtung abgefahren bzw. selektiv bedruckt wurde, kann das Aufbringen und selektive Bedrucken einer nächsten Schicht erfolgen. Hierzu kann der Beschichter 3, ausgehend von seiner in Figur 2 gezeigten Position ("oben") in der ersten Richtung H₁ über den Bauraum B1 hinweg verfahren (nun von oben nach unten), um den Bauraum B1 in Form einer gleichmäßigen Baumaterial-Schicht aus dem zu verfestigenden Baumaterial mit Baumaterial zu versorgen. Noch bevor der Beschichter den Bauraum B1 vollständig überfahren hat und vor Erreichen der in Figur 1 gezeigten Position des Beschichters 3, wird der Druckkopf 7, ausgehend von seiner in Figur 2 gezeigten Position ("oben links"), in der zweiten Richtung H₂ über den Bauraum B1 hinweg verfahren (oberer, waagrechter Pfeil H2 in Figur 2), um auf einen ersten/oberen Druckabschnitt der von dem Beschichter 3 aufgebrachten Baumaterial-Schicht fließfähiges Behandlungsmittel gesteuert auszugeben. Anschließend wird der Druckkopf 7 wieder in der ersten Richtung versetzt, so dass er bzgl. des Trägers 9 mittig angeordnet ist, und daraufhin wird der Druckkopf 7 erneut in der zweiten Richtung H₂ über den Bauraum B1 hinweg verfahren (mittlerer, waagrechter Pfeil H2 in Figur 2), um auf einen zweiten/mittleren Druckabschnitt der Baumaterial-Schicht fließfähiges Behandlungsmittel gesteuert auszugeben. Anschließend wird der Druckkopf 7 erneut in der ersten Richtung versetzt, so dass er bzgl. des Trägers 9 unten angeordnet ist, und daraufhin wird der Druckkopf 7 erneut in der zweiten Richtung H₂ über den Bauraum B1 hinweg verfahren (unterer, waagrechter Pfeil H2 in Figur 2), um auf einen dritten/unteren Druckabschnitt der Baumaterial-Schicht fließfähiges Behandlungsmittel gesteuert auszugeben. Während dem Verfahren und Versetzen des Druckkopfes 7 wird der Beschichter 3 weiter in der ersten Richtung verfahren, um das Aufbringen der nächsten Schicht abzuschließen. Somit arbeitet der Druckkopf 7 erneut "im Rücken" des Beschichters 3, und die Steuervorrichtung C ist eingerichtet, den Beschichter 3 und die Druckvorrichtung 5 ausgehend von der zweiten Seite zurück zu der ersten Seite zu bewegen unter erneuter Ausgabe von Partikelmaterial bzw. fließfähigem Behandlungsmittel. Die in den Figuren 1 und 2 gezeigte Abfolge kann dabei beliebig oft wiederholt werden.

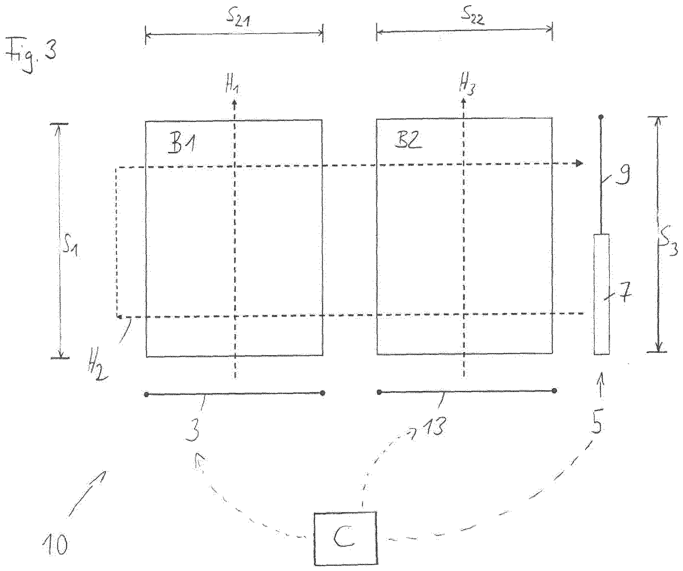

**Figur 3** zeigt eine schematische Ansicht eines 3D-Druckers 10 gemäß einer zweiten Ausführungsform, welche Teil der Erfindung ist.

Auf eine Beschreibung von Merkmalen, die zu denen des 3D-Druckers 1 der ersten Ausführungsform ähnlich oder identisch sind, wird im Folgenden teilweise verzichtet, und es wird sich auf die Beschreibung zusätzlicher oder alternativer Merkmale konzentriert.

Wie aus Figur 3 ersichtlich, weist der 3D-Drucker 10 zusätzlich einen zweiten Bauraum B2 auf, der hier beispielgebend wie der erste Bauraum B1 ausgebildet ist und die gleiche Form und Größe hat. Die beiden Bauräume B1 und B2 sind dabei mit zwei langen Rechteckseiten benachbart zueinander angeordnet. Zudem weist der 3D-Drucker 10 einen zweiten Beschichter 13 auf, der hier beispielgebend wie der erste Beschichter 3 ausgebildet ist (bidirektionaler Behälter-Beschichter) und entlang einer dritten Richtung H₃ über den zweiten Bauraum B2 verfahrbar ist. Die beiden Richtungen H₁ und H₃ sind hier beispielgebend im Wesentlichen parallel zueinander sowie parallel zu den langen Rechteckseiten, und schneiden die zweite Richtung H₂ jeweils in einem Winkel von im Wesentlichen 90°. Anders als in der ersten Ausführungsform erfolgt das selektive Bedrucken einer Schicht gemäß der zweiten Ausführungsform beispielgebend mit/in zwei Druckabschnitten. Die Abmessung S₂₁ des ersten Bauraums B1 in zweiter Richtung ist im Wesentlichen gleich der Abmessung S₂₂ des zweiten Bauraums B2 in zweiter Richtung, und die Abmessung S₁ des ersten Bauraums B1 in erster Richtung ist im Wesentlichen gleich der Abmessung S₃ des zweiten Bauraums B2 in dritter Richtung, wobei S21 kleiner als S1 ist und wobei S22 kleiner als S3 ist. Die Abmessungen S₂₁, S₂₂ können den kurzen Rechteckseiten entsprechen, und die Abmessungen S₁, S₃ können den langen Rechteckseiten entsprechen. Der Druckkopf 7 wird hier entlang eines U-förmigen Pfads bzw. eines Pfads mit zwei parallelen Einzelstrecken in zweiter Richtung verfahren, und der Druckkopf 7 bzw. ein Ausgabebereich desselben kann hier zum Beispiel eine Länge von 45%-60% der Erstreckung S₁ und/oder S₂ haben.

Der 3D-Drucker 10 ist eingerichtet, um in dem ersten Bauraum B1 und dem dazu benachbarten zweiten Bauraum B2 jeweils ein oder mehrere dreidimensionale Bauteile schichtweise aufzubauen, wozu dem ersten Bauraum B1 der erste Beschichter 3 und dem zweiten Bauraum B2 der zweite Beschichter 13 zugeordnet ist, die in der ersten Richtung H₁ über den ersten Bauraum B1 bzw. in der dritten Richtung H₃ über den zweiten Bauraum B2 hinweg verfahrbar sind, um den jeweiligen Bauraum in Form einer gleichmäßigen Baumaterial-Schicht aus dem zu verfestigenden Baumaterial mit Baumaterial zu versorgen. Der 3D-Drucker weist zudem die Druckvorrichtung 5 auf, die hier als gemeinsame Druckvorrichtung fungiert, welche von den beiden Bauräumen geteilt wird und welche (wiederholt, in versetzter Art) in der zweiten Richtung H₂ über den ersten Bauraum B1 und den zweiten Bauraum B2 hinweg verfahrbar ist, um auf einen Teilbereich von einer zuvor aufgebrachten Baumaterial-Schicht des ersten Bauraums B1 und einen Teilbereich von einer zuvor aufgebrachten Baumaterial-Schicht des zweiten Bauraums B2 ein fließfähiges Behandlungsmittel gesteuert auszugeben.

Die Steuervorrichtung C ist hier zudem mit dem zweiten Beschichter 13 verbunden und eingerichtet, um den ersten Beschichter 3, den zweiten Beschichter 13 und die gemeinsame Druckvorrichtung 5 derart zu steuern, dass eine Fahrt des ersten Beschichters 3 in erster Richtung H₁ über den ersten Bauraum B1 hinweg und eine Fahrt des zweiten Beschichters 13 in dritter Richtung H₃ über den zweiten Bauraum B2 hinweg mit mindestens einer von einer Fahrt der gemeinsamen Druckvorrichtung 5 in zweiter Richtung H₂ über den ersten Bauraum B1 und einer Fahrt der gemeinsamen Druckvorrichtung 5 in zweiter Richtung H₂ über den zweiten Bauraum B2 hinweg zeitlich überlappen, und/oder dass die Versorgung mit Baumaterial des ersten Bauraums B1 durch den ersten Beschichter 3 und die Versorgung mit Baumaterial des zweiten Bauraums B2 durch den zweiten Beschichter 13 mit der gesteuerten Ausgabe von fließfähigem Behandlungsmittel auf eine zuvor aufgebrachte Baumaterial-Schicht von mindestens einem von dem ersten Bauraum B1 und dem zweiten Bauraum B2 zeitlich überlappen.

Das Arbeitsprinzip des 3D-Druckers 10 ist ähnlich dem des 3D-Druckers 1 und im Detail wie folgt.

Zunächst werden der erste Beschichter 3 und der zweite Beschichter 13, ausgehend von ihrer in Figur 3 gezeigten Position ("unten") in der ersten Richtung H₁ bzw. der dritten Richtung H₃ über den ersten Bauraum B1 bzw. den zweiten Bauraum B2 hinweg verfahren, um den jeweiligen Bauraum in Form einer gleichmäßigen Baumaterial-Schicht aus dem zu verfestigenden Baumaterial mit Baumaterial zu versorgen. Die beiden Beschichter 3, 13 können dabei im Wesentlichen synchron bzw. im Wesentlichen vollständig parallelisiert über das jeweilige Baufeld laufen. Noch bevor die beiden Beschichter 3, 13 den jeweils zugehörigen Bauraum vollständig überfahren haben, zum Beispiel wenn die Beschichter 3, 13 im Wesentlichen die Mitte des jeweiligen Bauraums in erster Richtung erreicht haben, wird der Druckkopf 7, ausgehend von seiner in Figur 3 gezeigten Position ("unten rechts"), in der zweiten Richtung H₂ nacheinander über den zweiten und den ersten Bauraum (in der genannten Reihenfolge) hinweg verfahren (unterer, waagrechter Pfeil H₂ in Figur 3), um auf einen ersten/unteren Druckabschnitt der von dem Beschichter 3 aufgebrachten Baumaterial-Schicht und auf einen ersten/unteren Druckabschnitt der von dem Beschichter 13 aufgebrachten Baumaterial-Schicht fließfähiges Behandlungsmittel gesteuert auszugeben, welches zu einer selektiven Verfestigung der jeweiligen Schicht bzw. des jeweiligen Druckabschnitts beiträgt. Anschließend wird der Druckkopf 7 in der ersten Richtung H₁ versetzt, so dass er bzgl. des Trägers 9 oben angeordnet ist, und daraufhin wird der Druckkopf 7 mittels des Trägers 9 erneut in der zweiten Richtung H₂ über den ersten und den zweiten Bauraum (in der genannten Reihenfolge) hinweg verfahren (oberer, waagrechter Pfeil H₂ in Figur 3), um auf einen zweiten/oberen Druckabschnitt der jeweiligen Baumaterial-Schicht fließfähiges Behandlungsmittel gesteuert auszugeben. Während dem beschriebenen Verfahren und Versetzen des Druckkopfes 7 werden der erste und der zweite Beschichter 3, 13 weiter in erster bzw. dritter Richtung verfahren, um das Aufbringen der jeweiligen Schicht abzuschließen. Somit arbeitet der Druckkopf "im Rücken" des ersten und des zweiten Beschichters 3, 13, und die Steuervorrichtung C ist eingerichtet, den ersten Beschichter 3, den zweiten Beschichter 13 und die gemeinsame Druckvorrichtung 5 bzw. den Druckkopf 7, ausgehend von einer gemeinsamen, ersten/unteren Seite - in der ersten Richtung gesehen - (siehe Figur 3) über den Bauraum hinweg zu einer gegenüberliegenden, zweiten/oberen Seite - in der ersten Richtung gesehen - zu bewegen unter Ausgabe von Partikelmaterial bzw. fließfähigem Behandlungsmittel.

Nachdem die von den Beschichtern 3, 13 aufgebrachten Schichten vollständig von der Druckvorrichtung 5 abgefahren bzw. selektiv bedruckt wurden, kann das Aufbringen und selektive Bedrucken einer nächsten Schicht in dem jeweiligen Bauraum erfolgen. Hierzu können der erste und der zweite Beschichter 3 erneut in der ersten Richtung H₁ bzw. der dritten Richtung H₃ über den jeweiligen Bauraum hinweg verfahren werden, nun jedoch von oben nach unten, um den jeweiligen Bauraum in Form einer gleichmäßigen Baumaterial-Schicht aus dem zu verfestigenden Baumaterial mit Baumaterial zu versorgen. Noch bevor der jeweilige Beschichter seinen zugehörigen Bauraum vollständig überfahren hat und vor Erreichen der in Figur 3 gezeigten Positionen der Beschichter 3, 13, wird der Druckkopf 7, ausgehend von einer Position "oben rechts", in der zweiten Richtung H₂ über die beiden Bauräume hinweg verfahren (entgegen dem oberen, waagrechten Pfeil H2 in Figur 3), um auf einen ersten/oberen Druckabschnitt der jeweiligen Baumaterial-Schicht fließfähiges Behandlungsmittel gesteuert auszugeben. Anschließend wird der Druckkopf 7 wieder in der ersten Richtung versetzt, so dass er bzgl. des Trägers 9 unten angeordnet ist, und daraufhin wird der Druckkopf 7 erneut in der zweiten Richtung H₂ über die beiden Bauräume hinweg verfahren (entgegen dem unteren, waagrechten Pfeil H2 in Figur 3), um auf einen zweiten/unteren Druckabschnitt der jeweiligen Baumaterial-Schicht fließfähiges Behandlungsmittel gesteuert auszugeben. Während dem Verfahren und Versetzen des Druckkopfes 7 werden die Beschichter 3, 13 weiter in der ersten Richtung nach unten verfahren, um das jeweilige Aufbringen der nächsten Schicht abzuschließen. Somit arbeitet der Druckkopf 7 erneut "im Rücken" der Beschichters 3, 13, und die Steuervorrichtung C ist eingerichtet, den ersten Beschichter 3, den zweiten Beschichter 13 und die Druckvorrichtung 5 ausgehend von der zweiten/oberen Seite zurück zu der ersten/unteren Seite zu bewegen unter erneuter Ausgabe von Partikelmaterial bzw. fließfähigem Behandlungsmittel. Die beschriebene Abfolge kann dabei beliebig oft wiederholt werden.

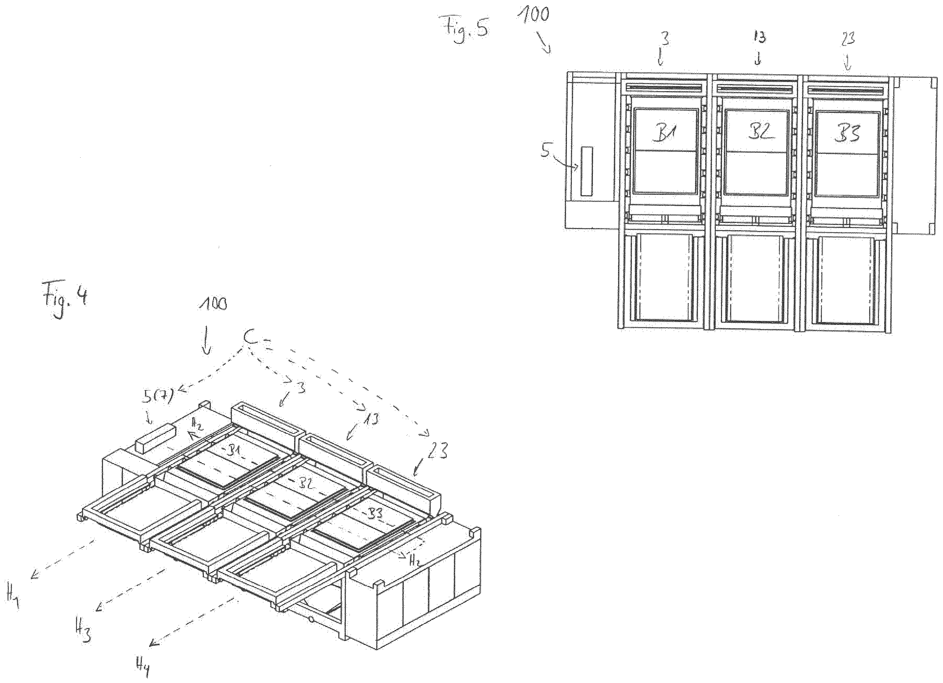

Die **Figuren 4 und 5** zeigen jeweils eine schematische Ansicht eines 3D-Druckers 100 gemäß einer dritten Ausführungsform, welche Teil der Erfindung ist.

Auf eine Beschreibung von Merkmalen, die denen des 3D-Druckers 10 ähnlich oder identisch sind (bzw. denen des 3D-Druckers 1), wird im Folgenden teilweise verzichtet, und es wird sich auf die Beschreibung zusätzlicher oder alternativer Merkmale konzentriert.

Wie aus den Figuren 4 und 5 ersichtlich, weist der 3D-Drucker 100 zusätzlich einen dritten Bauraum B3 auf, der hier beispielgebend wie der erste Bauraum B1 und der zweite Bauraum B2 ausgebildet ist und auch die gleiche Form und Größe hat. Die insgesamt drei Bauräume B1, B2, B3 sind dabei mit ihren langen Rechteckseiten benachbart zueinander angeordnet. Zudem weist der 3D-Drucker 100 einen dritten Beschichter 23 auf, der hier beispielgebend wie der erste und der zweite Beschichter 3, 13 ausgebildet ist (bidirektionaler Behälter-Beschichter) und entlang einer vierten Richtung H₄ über den dritten Bauraum B3 hinweg verfahrbar ist. Die Richtungen H₁, H₃ und H₄ sind hier beispielgebend im Wesentlichen parallel zueinander sowie parallel zu den langen Rechteckseiten, und schneiden die zweite Richtung H₂ jeweils in einem Winkel von im Wesentlichen 90°. Wie in der zweiten Ausführungsform erfolgt das selektive Bedrucken einer jeweiligen Schicht gemäß der dritten Ausführungsform beispielgebend mit/in zwei Druckabschnitten. Die Abmessungen der Bauräume in zweiter Richtung sind im Wesentlichen gleich, und auch die Abmessungen der Bauräume in erster, dritter bzw. vierter Richtung sind im Wesentlichen gleich, wobei die jeweilige Abmessung in zweiter Richtung kleiner ist als die jeweilige Abmessung in erster, dritter bzw. vierter Richtung. Die Abmessungen in zweiter Richtung können den kurzen Rechteckseiten entsprechen, und die Abmessungen in erster, dritter bzw. vierter Richtung können den langen Rechteckseiten entsprechen. Es versteht sich, dass der 3D-Drucker um einen oder mehrere weitere Bauräume ergänzt werden kann, die in Figur 5 rechts neben dem Bauraum B3 angeordnet werden können (in gleicher Ausrichtung wie die gezeigten Bauräume), die jeweils einen zugeordneten separaten Beschichter aufweisen können und die zudem von der gemeinsamen Druckvorrichtung bedient werden können.

Der 3D-Drucker 100 ist eingerichtet, um in jedem der Bauräume B1, B2 und B3 ein oder mehrere dreidimensionale Bauteile schichtweise aufzubauen, wozu jedem Bauraum ein separater Beschichter zugeordnet ist. Der 3D-Drucker weist zudem die Druckvorrichtung 5 auf, die hier als gemeinsame Druckvorrichtung fungiert, welche von sämtlichen Bauräumen B1, B2 und B3 geteilt wird und welche (wiederholt, in versetzter Art) in der zweiten Richtung H₂ über sämtliche Bauräume B1, B2 und B3 hinweg verfahrbar ist, um auf einen Teilbereich von einer zuvor aufgebrachten Baumaterial-Schicht des jeweiligen Bauraums ein fließfähiges Behandlungsmittel gesteuert auszugeben.

Die Steuervorrichtung C ist hier zudem mit dem dritten Beschichter 23 verbunden und eingerichtet, um die Beschichter 3, 13, 23 und die gemeinsame Druckvorrichtung 5 derart zu steuern, dass eine jeweilige Fahrt der Beschichter über den zugehörigen Bauraum hinweg mit der Fahrt der gemeinsamen Druckvorrichtung 5 in zweiter Richtung H₂ über mindestens einen der Bauräume hinweg zeitlich überlappt, und/oder dass die Versorgung mit Baumaterial des jeweiligen Bauraums durch den zugehörigen Beschichter mit der gesteuerten Ausgabe von fließfähigem Behandlungsmittel auf eine zuvor aufgebrachte Baumaterial-Schicht von mindestens einem der Bauräume zeitlich überlappt.

Das Arbeitsprinzip des 3D-Druckers 100 kann ähnlich dem des 3D-Druckers 10 sein. Insofern ist anzumerken, dass in den Figuren 4 und 5 die Druckvorrichtung 5 einerseits und die Beschichter 3, 13, 23 andererseits auf verschiedenen Seiten in erster Richtung angeordnet sind, wobei vor dem Auftragen und selektiven Bedrucken einer jeweiligen Schicht die Druckvorrichtung 5 und die Beschichter 3, 13, 23 auf einer gemeinsamen Seite in erster Richtung anzuordnen wären. Alternativ kann ausgehend von Figur 4 mittels der Beschichter 3, 13, 23 eine Schicht in dem jeweiligen Bauraum aufgebracht werden, durch nach unten Fahren der Beschichter. Anschließend kann die Schicht in dem jeweiligen Bauraum selektiv bedruckt werden, indem der Druckkopf 7 der Druckvorrichtung 5 ausgehend von der in Figur 4 gezeigten Position U-förmig über die Bauräume mäandert, wie durch die beiden gestrichelten Pfeile H₂ und die gestrichelte Verbindungslinie angedeutet. Dabei können die Beschichter 3, 13, 23 im Rücken der Druckvorrichtung 5 bereits mit dem Auftragen einer neuen Schicht beginnen, sobald die Druckvorrichtung 5 ausreichend weit gelaufen ist, zum Beispiel wenn/nachdem die Druckvorrichtung 5 mit dem selektiven Bedrucken des oberen, zweiten Druckabschnitts beginnt, und bevor das selektive Bedrucken abgeschlossen ist.

## Patentansprüche

1. 3D-Drucker (10),
der eingerichtet ist, um in einem ersten Bauraum (B1) und in einem dazu benachbarten zweiten Bauraum (B2) jeweils ein oder mehrere dreidimensionale Bauteile schichtweise aufzubauen,
wobei dem ersten Bauraum (B1) ein erster Beschichter (3) und dem zweiten Bauraum (B2) ein zweiter Beschichter (13) zugeordnet ist, die in einer ersten Richtung (H₁) über den ersten Bauraum (B1) bzw. in einer zu der ersten Richtung im Wesentlichen parallelen dritten Richtung (H₃) über den zweiten Bauraum (B2) hinweg verfahrbar sind, um den jeweiligen Bauraum in Form einer gleichmäßigen Baumaterial-Schicht aus dem zu verfestigenden Baumaterial mit Baumaterial zu versorgen,
mit einer gemeinsamen Druckvorrichtung (5), die in einer zweiten Richtung (H₂), welche zu der ersten und der dritten Richtung (H₁, H₃) in einem Winkel angeordnet ist, über den ersten Bauraum (B1) und den zweiten Bauraum (B2) hinweg verfahrbar ist, um auf einen Teilbereich von einer zuvor aufgebrachten Baumaterial-Schicht des ersten Bauraums (B1) und einen Teilbereich von einer zuvor aufgebrachten Baumaterial-Schicht des zweiten Bauraums (B2) ein fließfähiges Behandlungsmittel gesteuert auszugeben,
wobei ein Ausgabebereich des ersten Beschichters (3) in einer Richtung senkrecht zu der ersten Richtung (H₁) den ersten Bauraum (B1) vollständig überspannt,
wobei ein Ausgabebereich des zweiten Beschichters (13) in einer Richtung senkrecht zu der dritten Richtung (H₃) den zweiten Bauraum (B2) vollständig überspannt,
wobei eine von dem ersten Beschichter (3) zurückzulegende Strecke (S₁) über den ersten Bauraum (B1) hinweg entlang der ersten Richtung (H₁) größer oder gleich einer von der Druckvorrichtung (5) zurückzulegenden (Einzel-)Strecke (S₂₁) über den ersten Bauraum (B1) hinweg entlang der zweiten Richtung (H₂) ist,
wobei eine von dem zweiten Beschichter (13) zurückzulegende Strecke (S₃) über den zweiten Bauraum (B2) hinweg entlang der dritten Richtung (H₃) größer oder gleich einer von der Druckvorrichtung (5) zurückzulegenden (Einzel-)Strecke (S₂₂) über den zweiten Bauraum (B2) hinweg entlang der zweiten Richtung (H₂) ist,
ferner aufweisend eine Steuervorrichtung (C), die eingerichtet ist, um den ersten Beschichter (3), den zweiten Beschichter (13) und die gemeinsame Druckvorrichtung (5) derart zu steuern, dass eine Fahrt des ersten Beschichters (3) in erster Richtung (H₁) über den ersten Bauraum (B1) hinweg und eine Fahrt des zweiten Beschichters (13) in dritter Richtung (H₃) über den zweiten Bauraum (B2) hinweg mit mindestens einer von einer Fahrt der Druckvorrichtung (5) in zweiter Richtung (H₂) über den ersten Bauraum (B1) und einer Fahrt der Druckvorrichtung (5) in zweiter Richtung (H₂) über den zweiten Bauraum (B2) hinweg zeitlich überlappen, und/oder dass die Versorgung mit Baumaterial des ersten Bauraums (B1) durch den ersten Beschichter (3) und die Versorgung mit Baumaterial des zweiten Bauraums (B2) durch den zweiten Beschichter (13) mit der gesteuerten Ausgabe von fließfähigem Behandlungsmittel auf eine zuvor aufgebrachte Baumaterial-Schicht von mindestens einem von dem ersten Bauraum (B1) und dem zweiten Bauraum (B2) zeitlich überlappen.

2. 3D-Drucker (10) nach Anspruch 1, wobei
die Druckvorrichtung (5) einen Druckkopf (7) aufweist, der in der ersten Richtung (H₁) versetzbar ist, und die Steuervorrichtung (C) eingerichtet ist, um den Druckkopf zum selektiven Bedrucken einer Baumaterial-Schicht des ersten Bauraums (B1) und einer Baumaterial-Schicht des zweiten Bauraums (B2) mehrfach in der zweiten Richtung (H₂) über den ersten und den zweiten Bauraum (B1, B2) zu verfahren, zum Beispiel derart, dass der Druckkopf (7) insgesamt mäanderförmig über den ersten und den zweiten Bauraum (B1, B2) hinweg verfährt, zum Beispiel entlang eines U-förmigen Pfads oder eines S-förmigen Pfads, und/oder
die von dem ersten Beschichter (3) zurückzulegende Strecke (S₁) über den ersten Bauraum (B1) hinweg entlang der ersten Richtung (H₁) mindestens um den Faktor 1,2 größer der von der Druckvorrichtung (5) zurückzulegenden (Einzel-)Strecke (S₂₁) über den ersten Bauraum (B1) hinweg entlang der zweiten Richtung (H₂) ist, und/oder
die von dem zweiten Beschichter (13) zurückzulegende Strecke (S₃) über den zweiten Bauraum (B2) hinweg entlang der dritten Richtung (H₃) mindestens um den Faktor 1,2 größer der von der Druckvorrichtung (5) zurückzulegenden (Einzel-)Strecke (S₂₂) über den zweiten Bauraum (B2) hinweg entlang der zweiten Richtung (H₂) ist, und/oder
der erste Beschichter (3) und der zweite Beschichter (13) jeweils als bidirektionaler Beschichter ausgebildet sind und/oder wobei die Druckvorrichtung (5) als bidirektionale Druckvorrichtung ausgebildet ist.

3. 3D-Drucker (10) nach Anspruch 1 oder 2, wobei
der erste Bauraum (B1) und der zweite Bauraum (B2) im Wesentlichen die gleiche Form und Größe haben und/oder
der erste Bauraum (B1) und der zweite Bauraum (B2) in der zweiten Richtung (H2) gesehen hintereinander angeordnet sind und/oder
der erste Bauraum (B1) und der zweite Bauraum (B2) jeweils rechteckig ausgebildet sind, zum Beispiel mit zwei langen und zwei kurzen Seiten, wobei der erste und der zweite Bauraum (B1, B2) mit zwei langen Seiten benachbart zueinander angeordnet sind und/oder wobei die erste Richtung (H₁) und die dritte Richtung (H₃) im Wesentlichen parallel sind zu den langen Seiten des ersten Bauraums bzw. den langen Seiten des zweiten Bauraums, und/oder
ein Ausgabebereich eines Druckkopfes (7) der Druckvorrichtung in einer Richtung senkrecht zu der zweiten Richtung (H₂) und/oder in der ersten Richtung (H₁) langgestreckt ist, und/oder
ein Ausgabebereich des Druckkopfes (7) in einer Richtung senkrecht zu der zweiten Richtung (H₂) und/oder in der ersten Richtung (H₁) kürzer als der erste Bauraum (B1) und/oder kürzer als die von dem ersten Beschichter (3) zurückzulegende Strecke (S₁) ist, zum Beispiel im Wesentlichen halb so groß oder kleiner, und/oder
wobei eine von der Druckvorrichtung (5) zurückzulegende einzelne Strecke (S₂₁) über den ersten Bauraum (B1) hinweg entlang der zweiten Richtung (H₂) 1,0m bis 1,4m, zum Beispiel 1,2m, ist und/oder
wobei eine von der Druckvorrichtung (5) zurückzulegende einzelne Strecke (S₂₂) über den zweiten Bauraum (B2) hinweg entlang der zweiten Richtung (H₂) 1,0m bis 1,4m, zum Beispiel 1,2m, ist und/oder
die Steuervorrichtung (C) eingerichtet ist, den ersten Beschichter (3), den zweiten Beschichter (13) und die gemeinsame Druckvorrichtung (5), zum Beispiel den Druckkopf (7), ausgehend von einer gemeinsamen, ersten Seite - in der ersten und dritten Richtung gesehen - über den ersten und zweiten Bauraum hinweg zu einer gegenüberliegenden, zweiten Seite - in der ersten und dritten Richtung gesehen - zu bewegen unter Ausgabe von Partikelmaterial bzw. fließfähigem Behandlungsmittel, und wobei optional anschließend der erste Beschichter (3), der zweite Beschichter (13) und die gemeinsame Druckvorrichtung (5), zum Beispiel der Druckkopf (7), ausgehend von der zweiten Seite zurück zu der ersten Seite bewegt werden unter erneuter Ausgabe von Partikelmaterial bzw. fließfähigem Behandlungsmittel.

4. 3D-Drucker (10) nach einem der Ansprüche 1 bis 3,
ferner aufweisend einen dritten Bauraum (B3), der benachbart zu dem zweiten Bauraum (B2) angeordnet ist, und einen dritten Beschichter (23), der dem dritten Bauraum (B3) zugeordnet ist und entlang einer zu der ersten Richtung (H₁) im Wesentlichen parallelen vierten Richtung (H₄) über den dritten Bauraum (B3) hinweg verfahrbar ist, um den dritten Bauraum (B3) in Form einer gleichmäßigen Baumaterial-Schicht aus dem zu verfestigenden Baumaterial mit Baumaterial zu versorgen,
wobei der 3D-Drucker eingerichtet ist, um in dem dritten Bauraum (B3) ein oder mehrere dreidimensionale Bauteile schichtweise aufzubauen,
wobei die gemeinsame Druckvorrichtung (5) in der zweiten Richtung (H₂) über den dritten Bauraum (B3) hinweg verfahrbar ist, um auf einen Teilbereich von einer zuvor aufgebrachten Baumaterial-Schicht des dritten Bauraums (B3) ein fließfähiges Behandlungsmittel gesteuert auszugeben,
wobei ein Ausgabebereich des dritten Beschichters (23) in einer Richtung senkrecht zu der vierten Richtung (H₄) den dritten Bauraum (B3) vollständig überspannt,
wobei eine von dem dritten Beschichter (23) zurückzulegende Strecke über den dritten Bauraum (B3) hinweg entlang der vierten Richtung (H₄) größer oder gleich einer von der Druckvorrichtung (5) zurückzulegenden (Einzel-)Strecke über den dritten Bauraum (B3) hinweg entlang der zweiten Richtung (H₂) ist, und
wobei die Steuervorrichtung (C) eingerichtet ist, um den ersten Beschichter (3), den zweiten Beschichter (13), den dritten Beschichter (23) und die gemeinsame Druckvorrichtung (5) derart zu steuern, dass eine jeweilige Fahrt der Beschichter über den zugehörigen Bauraum hinweg mit der Fahrt der gemeinsamen Druckvorrichtung (5) in zweiter Richtung (H₂) über mindestens einen der Bauräume (2, 12, 23) hinweg zeitlich überlappt, und/oder dass die Versorgung mit Baumaterial des jeweiligen Bauraums durch den zugehörigen Beschichter mit der gesteuerten Ausgabe von fließfähigem Behandlungsmittel auf eine zuvor aufgebrachte Baumaterial-Schicht von mindestens einem der Bauräume (2, 12, 23) zeitlich überlappt.

5. Generatives Fertigungsverfahren zum Herstellen mindestens eines dreidimensionalen Bauteils, z.B. einer Gussform oder einem Gießkern, in einem ersten Bauraum (B1) eines 3D-Druckers und mindestens eines dreidimensionalen Bauteils, z.B. einer Gussform oder einem Gießkern, in einem zweiten Bauraum (B2) des 3D-Druckers, der benachbart zu dem ersten Bauraum (B1) angeordnet ist, aufweisend:
Ausbilden übereinanderliegender Schichten von partikelförmigem Baumaterial, z.B. enthaltend Sandpartikel, in dem ersten Bauraum (B1) unter Verwendung eines ersten Beschichters (3), der zum Aufbringen einer jeweiligen Schicht in einer ersten Richtung (H₁) über den ersten Bauraum (B1) hinweg verfahren wird,
Ausbilden übereinanderliegender Schichten von partikelförmigem Baumaterial, z.B. enthaltend Sandpartikel, in dem zweiten Bauraum (B2) unter Verwendung eines zweiten Beschichters (3), der zum Aufbringen einer jeweiligen Schicht in einer zu der ersten Richtung im Wesentlichen parallelen dritten Richtung (H₃) über den zweiten Bauraum (B2) hinweg verfahren wird, und
selektives Bedrucken mehrerer benachbarter Baumaterial-Schichten in einem jeweiligen Teilbereich davon in dem ersten Bauraum (B1) und selektives Bedrucken mehrerer benachbarter Baumaterial-Schichten in einem jeweiligen Teilbereich davon in dem zweiten Bauraum (B2) unter Verwendung einer gemeinsamen Druckvorrichtung (5), die in einer zweiten Richtung (H₂), welche zu der ersten und der dritten Richtung (H₁, H₃) in einem Winkel angeordnet ist, über den ersten Bauraum (B1) und den zweiten Bauraum (B2) hinweg verfahren wird, um auf einen Teilbereich von einer zuvor aufgebrachten Baumaterial-Schicht in dem ersten Bauraum (B1) und auf einen Teilbereich von einer zuvor aufgebrachten Baumaterial-Schicht in dem zweiten Bauraum (B2) ein fließfähiges Behandlungsmittel gesteuert auszugeben, welches zu einer selektiven Verfestigung der jeweiligen Baumaterial-Schicht beiträgt,
wobei ein Ausgabebereich des ersten Beschichters (3) in einer Richtung senkrecht zu der ersten Richtung (H₁) den ersten Bauraum (B1) vollständig überspannt,
wobei ein Ausgabebereich des zweiten Beschichters (13) in einer Richtung senkrecht zu der dritten Richtung (H₃) den zweiten Bauraum (B2) vollständig überspannt,
wobei eine von dem ersten Beschichter (3) zurückgelegte Strecke (S₁) über den ersten Bauraum (B1) hinweg entlang der ersten Richtung (H₁) größer oder gleich einer von der Druckvorrichtung (5) zurückgelegten (Einzel-)Strecke (S₂₁) über den ersten Bauraum (B1) hinweg entlang der zweiten Richtung (H₂) ist,
wobei eine von dem zweiten Beschichter (13) zurückgelegte Strecke (S₃) über den zweiten Bauraum (B2) hinweg entlang der dritten Richtung (H₃) größer oder gleich einer von der Druckvorrichtung (5) zurückgelegten (Einzel-)Strecke (S₂₂) über den zweiten Bauraum (B2) hinweg entlang der zweiten Richtung (H₂) ist, und
wobei eine Fahrt des ersten Beschichters (3) in erster Richtung (H₁) über den ersten Bauraum (B1) hinweg und eine Fahrt des zweiten Beschichters (13) in dritter Richtung (H₃) über den zweiten Bauraum (B2) hinweg mit mindestens einer von einer Fahrt der gemeinsamen Druckvorrichtung (5) in zweiter Richtung (H₂) über den ersten Bauraum (B1) hinweg und einer Fahrt der gemeinsamen Druckvorrichtung (5) in zweiter Richtung (H₂) über den zweiten Bauraum (B2) hinweg zeitlich überlappend ausgeführt werden, und/oder die Versorgung mit Baumaterial des ersten Bauraums (B1) durch den ersten Beschichter (3) und die Versorgung mit Baumaterial des zweiten Bauraums (B2) durch den zweiten Beschichter (13) mit der gesteuerten Ausgabe von fließfähigem Behandlungsmittel auf eine zuvor aufgebrachte Baumaterial-Schicht von mindestens einem von dem ersten Bauraum (B1) und dem zweiten Bauraum (B2) zeitlich überlappend ausgeführt werden.

6. Generatives Fertigungsverfahren nach Anspruch 5, wobei
die gemeinsame Druckvorrichtung (5) einen gemeinsamen Druckkopf (7) aufweist, der in der ersten Richtung (H₁) versetzbar ist, und der gemeinsame Druckkopf zum selektiven Bedrucken einer Baumaterial-Schicht des ersten Bauraums (B1) und einer Baumaterial-Schicht des zweiten Bauraums (B2) mehrfach in der zweiten Richtung (H₂) über den ersten und den zweiten Bauraum (B1, B2) verfahren wird, zum Beispiel derart, dass der Druckkopf (7) insgesamt mäanderförmig über den ersten und den zweiten Bauraum (B1, B2) hinweg verfährt, zum Beispiel entlang eines U-förmigen Pfads oder eines S-förmigen Pfads, und/oder
die von dem ersten Beschichter (3) zurückgelegte Strecke (S₁) über den ersten Bauraum (B1) hinweg entlang der ersten Richtung (H₁) mindestens um den Faktor 1,2 größer der von der Druckvorrichtung (5) zurückgelegten (Einzel-)Strecke (S₂₁) über den ersten Bauraum (B1) hinweg entlang der zweiten Richtung (H₂) ist, und/oder
die von dem zweiten Beschichter (13) zurückgelegte Strecke (S₃) über den zweiten Bauraum (B2) hinweg entlang der dritten Richtung (H₃) mindestens um den Faktor 1,2 größer der von der Druckvorrichtung (5) zurückgelegten (Einzel-)Strecke (S₂₂) über den zweiten Bauraum (B2) hinweg entlang der zweiten Richtung (H₂) ist, und/oder
der erste Beschichter (3) und der zweite Beschichter (13) jeweils als bidirektionaler Beschichter betrieben werden und/oder wobei die Druckvorrichtung (5) als bidirektionale Druckvorrichtung betrieben wird und/oder
der erste Bauraum (B1) und der zweite Bauraum (B2) im Wesentlichen die gleiche Form und Größe haben und/oder
der erste Bauraum (B1) und der zweite Bauraum (B2) in der zweiten Richtung (H2) gesehen hintereinander angeordnet sind und/oder
der erste Bauraum (B1) und der zweite Bauraum (B2) jeweils rechteckig ausgebildet sind, zum Beispiel mit zwei langen und zwei kurzen Seiten, wobei der erste und der zweite Bauraum (B1, B2) mit zwei langen Seiten benachbart zueinander angeordnet sind und/oder wobei die erste Richtung (H₁) und die dritte Richtung (H₃) im Wesentlichen parallel sind zu den langen Seiten des ersten und des zweiten Bauraums (B1, B2), und/oder
ein Ausgabebereich eines Druckkopfes (7) der Druckvorrichtung in einer Richtung senkrecht zu der zweiten Richtung (H₂) und/oder in der ersten Richtung (H₁) langgestreckt ist, und/oder
ein Ausgabebereich des Druckkopfes (7) in einer Richtung senkrecht zu der zweiten Richtung (H₂) und/oder in der ersten Richtung (H₁) kürzer als der erste Bauraum (B1) und/oder kürzer als die von dem ersten Beschichter (3) zurückzulegende Strecke (S₁) ist, zum Beispiel im Wesentlichen halb so groß oder kleiner, und/oder
wobei eine von der Druckvorrichtung (5) zurückzulegende einzelne Strecke (S₂₁) über den ersten Bauraum (B1) hinweg entlang der zweiten Richtung (H₂) 1,0m bis 1,4m, zum Beispiel 1,2m, ist und/oder
wobei eine von der Druckvorrichtung (5) zurückzulegende einzelne Strecke (S₂₂) über den zweiten Bauraum (B2) hinweg entlang der zweiten Richtung (H₂) 1,0m bis 1,4m, zum Beispiel 1,2m, ist und/oder
der erste Beschichter (3), der zweite Beschichter (13) und der Druckkopf (7) ausgehend von einer gemeinsamen, ersten Seite - in der ersten und dritten Richtung gesehen - über den ersten und zweiten Bauraum hinweg zu einer gegenüberliegenden, zweiten Seite - in der ersten und dritten Richtung gesehen -bewegt werden unter Ausgabe von Partikelmaterial bzw. fließfähigem Behandlungsmittel, und wobei optional anschließend der erste Beschichter (3), der zweite Beschichter (13) und der Druckkopf (7) ausgehend von der zweiten Seite zurück zu der ersten Seite bewegt werden unter erneuter Ausgabe von Partikelmaterial bzw. fließfähigem Behandlungsmittel.

## Claims

1. 3D printer (10),
which is configured to build up respectively one or more three-dimensional components in layers in a first construction space (B1) and in a second construction space (B2) adjacent thereto,
wherein a first coating device (3) is assigned to the first construction space (B1) and a second coating device (13) is assigned to the second construction space (B2), which are movable in a first direction (H₁) across the first construction space (B1) and in a third direction (H₃) substantially parallel to the first direction across the second construction space (B2), respectively, in order to supply the respective construction space with construction material in the form of a uniform construction material layer of the construction material to be solidified,
with a common printing device (5) which is movable in a second direction (H₂) arranged at an angle to the first and third directions (H₁, H₃), across the first construction space (B1) and the second construction space (B2) in order to output a flowable treatment agent in a controlled manner to a partial region of a previously applied construction material layer of the first construction space (B1) and a partial region of a previously applied construction material layer of the second construction space (B2),
wherein an output region of the first coating device (3) completely spans the first construction space (B1) in a direction perpendicular to the first direction (H₁),
wherein an output region of the second coating device (13) completely spans the second construction space (B2) in a direction perpendicular to the third direction (H₃),
wherein a distance (S₁) to be travelled by the first coating device (3) across the first construction space (B1) along the first direction (H₁) is greater than or equal to a (single) distance (S₂₁) to be travelled by the printing device (5) across the first construction space (B1) along the second direction (H₂),
wherein a distance (S₃) to be travelled by the second coating device (13) across the second construction space (B2) along the third direction (H₃) is greater than or equal to a (single) distance (S₂₂) to be travelled by the printing device (5) across the second construction space (B2) along the second direction (H₂),
further comprising a control device (C) configured to control the first coating device (3), the second coating device (13) and the common printing device (5) in such a way that a travel of the first coating device (3) in the first direction (H₁) across the first construction space (B1) and a travel of the second coating device (13) in the third direction (H₃) across the second construction space (B2) overlap in time with at least one of a travel of the printing device (5) in the second direction (H₂) across the first construction space (B1) and a travel of the printing device (5) in the second direction (H₂) across the second construction space (B2), and/or that the supply of construction material to the first construction space (B1) by the first coating device (3) and the supply of construction material to the second construction space (B2) by the second coating device (13) overlap in time with the controlled output of flowable treatment agent to a previously applied construction material layer of at least one of the first construction space (B1) and the second construction space (B2).

2. 3D printer (10) according to claim 1, wherein
the printing device (5) comprises a print head (7) displaceable in the first direction (H₁), and the control device (C) is configured to move the print head several times in the second direction (H₂) across the first and second construction spaces (B1, B2) to selectively print a construction material layer of the first construction space (B1) and a construction material layer of the second construction space (B2) , for example in such a way that the print head (7) moves in an altogether meandering pattern across the first and second construction spaces (B1, B2), for example along a U-shaped path or an S-shaped path, and/or
the distance (S₁) to be travelled by the first coating device (3) across the first construction space (B1) along the first direction (H₁) is at least by a factor of 1.2 greater than the (single) distance (S₂₁) to be travelled by the printing device (5) across the first construction space (B1) along the second direction (H₂), and/or
the distance (S₃) to be travelled by the second coating device (13) across the second construction space (B2) along the third direction (H₃) is at least by a factor of 1.2 greater than the (single) distance (S₂₂) to be travelled by the printing device (5) across the second construction space (B2) along the second direction (H₂), and/or
the first coating device (3) and the second coating device (13) are each configured as bidirectional coating devices and/or wherein the printing device (5) is configured as a bidirectional printing device.

3. 3D printer (10) according to claim 1 or 2, wherein
the first construction space (B1) and the second construction space (B2) have substantially the same shape and size, and/or
the first construction space (B1) and the second construction space (B2) are arranged one after the other as viewed in the second direction (H2), and/or
the first construction space (B1) and the second construction space (B2) are each formed to be rectangular, for example with two long and two short sides, wherein the first and second construction spaces (B1, B2) are arranged with two long sides adjacent to each other and/or wherein the first direction (H₁) and the third direction (H₃) are substantially parallel to the long sides of the first construction space and the long sides of the second construction space, respectively, and/or
an output region of a print head (7) of the printing device is elongated in a direction perpendicular to the second direction (H₂) and/or in the first direction (H₁), and/or
an output region of the print head (7) in a direction perpendicular to the second direction (H₂) and/or in the first direction (H₁) is shorter than the first construction space (B1) and/or shorter than the distance (S₁) to be travelled by the first coating device (3), for example substantially half the size or less, and/or
wherein a single distance (S₂₁) to be travelled by the printing device (5) across the first construction space (B1) along the second direction (H₂) is 1.0 m to 1.4 m, for example 1.2 m, and/or
wherein a single distance (S₂₂) to be travelled by the printing device (5) across the second construction space (B2) along the second direction (H₂) is 1.0 m to 1.4 m, for example 1.2 m, and/or
the control device (C) is configured to move the first coating device (3), the second coating device (13) and the common printing device (5), for example the print head (7), starting from a common first side - as seen in the first and third directions - across the first and second construction spaces to an opposite second side - as seen in the first and third directions - thereby dispensing particulate material and/or flowable treatment agent, and wherein optionally subsequently the first coating device (3), the second coating device (13) and the common printing device (5), for example the print head (7), are moved starting from the second side back to the first side, thereby dispensing once again particulate material and/or flowable treatment agent.

4. 3D printer (10) according to any one of claims 1 to 3,
further comprising a third construction space (B3) arranged adjacent to the second construction space (B2), and a third coating device (23) assigned to the third construction space (B3) and movable along a fourth direction (H₄) substantially parallel to the first direction (H₁) across the third construction space (B3) in order to supply the third construction space (B3) with construction material in the form of a uniform construction material layer of the construction material to be solidified,
wherein the 3D printer is configured to build up one or more three-dimensional components in layers in the third construction space (B3),
wherein the common printing device (5) is movable in the second direction (H₂) across the third construction space (B3) in order to output a flowable treatment agent in a controlled manner onto a partial region of a previously applied construction material layer of the third construction space (B3),
wherein an output region of the third coating device (23) completely spans the third construction space (B3) in a direction perpendicular to the fourth direction (H₄),
wherein a distance to be travelled by the third coating device (23) across the third construction space (B3) along the fourth direction (H₄) is greater than or equal to a (single) distance to be travelled by the printing device (5) across the third construction space (B3) along the second direction (H₂), and
wherein the control device (C) is configured to control the first coating device (3), the second coating device (13), the third coating device (23) and the common printing device (5) such that a respective travel of the coating devices across the associated construction space overlaps in time with the travel of the common printing device (5) in the second direction (H₂) across at least one of the construction spaces (2, 12, 23), and/or that the supply of construction material to the respective construction space by the associated coating device overlaps in time with the controlled output of flowable treatment agent to a previously applied construction material layer of at least one of the construction spaces (2, 12, 23).

5. Generative manufacturing process for producing at least one three-dimensional component, e.g. a casting mold or a foundry core, in a first construction space (B1) of a 3D printer and at least one three-dimensional component, e.g. a casting mold or a foundry core, in a second construction space (B2) of the 3D printer which is arranged adjacent to the first construction space (B1), comprising:
forming layers of particulate construction material lying one upon another, e.g. containing sand particles, in the first construction space (B1) using a first coating device (3) which is moved across the first construction space (B1) in a first direction (H₁) to apply a respective layer,
forming layers of particulate construction material lying one upon another, e.g. containing sand particles, in the second construction space (B2) using a second coating device (3) which is moved across the second construction space (B2) in a third direction (H₃) substantially parallel to the first direction to apply a respective layer, and
selectively printing several adjacent construction material layers in a respective partial region thereof in the first construction space (B1) and selectively printing several adjacent construction material layers in a respective partial region thereof in the second construction space (B2) using a common printing device (5) which is moved across the first construction space (B1) and the second construction space (B2) in a second direction (H₂) which is arranged at an angle to the first and third directions (H₁, H₃) in order to output in a controlled manner a flowable treatment agent to a partial region of a previously applied construction material layer in the first construction space (B1) and to a partial region of a previously applied construction material layer in the second construction space (B2), which treatment agent contributes to a selective solidification of the respective construction material layer,
wherein an output region of the first coating device (3) completely spans the first construction space (B1) in a direction perpendicular to the first direction (H₁),
wherein an output region of the second coating device (13) completely spans the second construction space (B2) in a direction perpendicular to the third direction (H₃),
wherein a distance (S₁) travelled by the first coating device (3) across the first construction space (B1) along the first direction (H₁) is greater than or equal to a (single) distance (S₂₁) travelled by the printing device (5) across the first construction space (B1) along the second direction (H₂),
wherein a distance (S₃) travelled by the second coating device (13) across the second construction space (B2) along the third direction (H₃) is greater than or equal to a (single) distance (S₂₂) travelled by the printing device (5) across the second construction space (B2) along the second direction (H₂), and
wherein a travel of the first coating device (3) in the first direction (H₁) across the first construction space (B1) and a travel of the second coating device (13) in the third direction (H₃) across the second construction space (B2) are carried out in a way to overlap in time with at least one of a travel of the common printing device (5) in the second direction (H₂) across the first construction space (B1) and a travel of the common printing device (5) in the second direction (H₂) across the second construction space (B2), and/or the supply of construction material to the first construction space (B1) by the first coating device (3) and the supply of construction material to the second construction space (B2) by the second coating device (13) are carried out in a way to overlap in time with the controlled output of flowable treatment agent to a previously applied layer of construction material of at least one of the first construction space (B1) and the second construction space (B2).

6. Generative manufacturing process according to claim 5, wherein
the common printing device (5) comprises a common print head (7) displaceable in the first direction (H₁), and the common print head is moved several times in the second direction (H₂) across the first and second construction spaces (B1, B2) for selectively printing a construction material layer of the first construction space (B1) and a construction material layer of the second construction space (B2), for example in such a way that the print head (7) moves in an altogether meandering pattern across the first and second construction spaces (B1, B2), for example along a U-shaped path or an S-shaped path, and/or
the distance (S₁) travelled by the first coating device (3) across the first construction space (B1) along the first direction (H₁) is at least by a factor of 1.2 greater than the (single) distance (S₂₁) travelled by the printing device (5) across the first construction space (B1) along the second direction (H₂), and/or
the distance (S₃) travelled by the second coating device (13) across the second construction space (B2) along the third direction (H₃) is at least by a factor of 1.2 greater than the (single) distance (S₂₂) travelled by the printing device (5) across the second construction space (B2) along the second direction (H₂), and/or
the first coating device (3) and the second coating device (13) are each operated as bidirectional coating devices and/or wherein the printing device (5) is operated as a bidirectional printing device, and/or
the first construction space (B1) and the second construction space (B2) have substantially the same shape and size, and/or
the first construction space (B1) and the second construction space (B2) are arranged one after the other as viewed in the second direction (H2), and/or
the first construction space (B1) and the second construction space (B2) are each formed to be rectangular, for example with two long and two short sides, wherein the first and second construction spaces (B1, B2) are arranged with two long sides adjacent to each other and/or wherein the first direction (H₁) and the third direction (H₃) are substantially parallel to the long sides of the first and the second construction spaces (B1, B2), and/or
an output region of a print head (7) of the printing device is elongated in a direction perpendicular to the second direction (H₂) and/or in the first direction (H₁), and/or
an output region of the print head (7) in a direction perpendicular to the second direction (H₂) and/or in the first direction (H₁) is shorter than the first construction space (B1) and/or shorter than the distance (S₁) to be travelled by the first coating device (3), for example substantially half the size or less, and/or
wherein a single distance (S₂₁) to be travelled by the printing device (5) across the first construction space (B1) along the second direction (H₂) is 1.0 m to 1.4 m, for example 1.2 m, and/or
wherein a single distance (S₂₂) to be travelled by the printing device (5) across the second construction space (B2) along the second direction (H₂) is 1.0 m to 1.4 m, for example 1.2 m, and/or
the first coating device (3), the second coating device (13) and the print head (7) are moved starting from a common first side - as seen in the first and third directions - across the first and second construction spaces to an opposite second side - as seen in the first and third directions - thereby dispensing particulate material and flowable treatment agent, respectively, and wherein optionally subsequently the first coating device (3), the second coating device (13) and the print head (7) are moved starting from the second side back to the first side, thereby again dispensing particulate material and flowable treatment agent, respectively.

## Revendications

1. Imprimante 3D (10),
qui est configurée pour construire respectivement un ou plusieurs composants tridimensionnels en couches dans un premier espace de construction (B1) et dans un deuxième espace de construction (B2) adjacent à celui-ci,
dans laquelle un premier dispositif de revêtement (3) est associé au premier espace de construction (B1) et un deuxième dispositif de revêtement (13) est associé au deuxième espace de construction (B2), qui sont déplaçables dans une première direction (H₁) à travers le premier espace de construction (B1) et dans une troisième direction (H₃) sensiblement parallèle à la première direction à travers le deuxième espace de construction (B2), respectivement, afin d'alimenter l'espace de construction respectif en matériau de construction sous la forme d'une couche de matériau de construction uniforme du matériau de construction à solidifier,
avec un dispositif d'impression commun (5) qui est déplaçable dans une deuxième direction (H₂) disposée à un angle par rapport aux première et troisième directions (H₁, H₃), à travers le premier espace de construction (B1) et le deuxième espace de construction (B2) afin de distribuer de manière contrôlée un agent de traitement capable de couler sur une zone partielle d'une couche de matériau de construction précédemment appliquée du premier espace de construction (B1) et une zone partielle d'une couche de matériau de construction précédemment appliquée du deuxième espace de construction (B2),
dans laquelle une zone de distribution du premier dispositif de revêtement (3) recouvre complètement le premier espace de construction (B1) dans une direction perpendiculaire à la première direction (H₁),
dans laquelle une zone de distribution du deuxième dispositif de revêtement (13) recouvre complètement le deuxième espace de construction (B2) dans une direction perpendiculaire à la troisième direction (H₃),
dans laquelle une distance (S₁) à parcourir par le premier dispositif de revêtement (3) à travers le premier espace de construction (B1) le long de la première direction (H₁) est supérieure ou égale à une distance (unique) (S₂₁) à parcourir par le dispositif d'impression (5) à travers le premier espace de construction (B1) le long de la deuxième direction (H₂),
dans laquelle une distance (S₃) à parcourir par le deuxième dispositif de revêtement (13) à travers le deuxième espace de construction (B2) le long de la troisième direction (H₃) est supérieure ou égale à une distance (unique) (S₂₂) à parcourir par le dispositif d'impression (5) à travers le deuxième espace de construction (B2) le long de la deuxième direction (H₂),
comprenant en outre un dispositif de commande (C) configuré pour commander le premier dispositif de revêtement (3), le deuxième dispositif de revêtement (13) et le dispositif d'impression commun (5) de telle sorte qu'un déplacement du premier dispositif de revêtement (3) dans la première direction (H₁) à travers le premier espace de construction (B1) et un déplacement du deuxième dispositif de revêtement (13) dans la troisième direction (H₃) à travers le deuxième espace de construction (B2) se chevauchent dans le temps avec au moins l'un d'un déplacement du dispositif d'impression (5) dans la deuxième direction (H₂) à travers le premier espace de construction (B1) et d'un déplacement du dispositif d'impression (5) dans la deuxième direction (H₂) à travers le deuxième espace de construction (B2), et/ou que l'alimentation du premier espace de construction (B1) en matériau de construction par le premier dispositif de revêtement (3) et l'alimentation du deuxième espace de construction (B2) en matériau de construction par le deuxième dispositif de revêtement (13) se chevauchent dans le temps avec la distribution contrôlée d'un agent de traitement capable de couler sur une couche de matériau de construction précédemment appliquée d'au moins l'un du premier espace de construction (B1) et du deuxième espace de construction (B2).

2. Imprimante 3D (10) selon la revendication 1, dans laquelle
le dispositif d'impression (5) comprend une tête d'impression (7) déplaçable dans la première direction (H₁), et le dispositif de commande (C) est configuré pour déplacer la tête d'impression pour imprimer sélectivement une couche de matériau de construction du premier espace de construction (B1) et une couche de matériau de construction du deuxième espace de construction (B2) plusieurs fois dans la deuxième direction (H₂) à travers les premier et deuxième espaces de construction (B1, B2), par exemple de telle sorte que la tête d'impression (7) se déplace dans l'ensemble en forme de méandres à travers les premier et deuxième espaces de construction (B1, B2), par exemple le long d'une trajectoire en forme de U ou d'une trajectoire en forme de S, et/ou
la distance (S₁) à parcourir par le premier dispositif de revêtement (3) à travers le premier espace de construction (B1) le long de la première direction (H₁) est au moins du facteur de 1,2 supérieure à la distance (unique) (S₂₁) à parcourir par le dispositif d'impression (5) à travers le premier espace de construction (B1) le long de la deuxième direction (H₂), et/ou
la distance (S₃) à parcourir par le deuxième dispositif de revêtement (13) à travers le deuxième espace de construction (B2) le long de la troisième direction (H₃) est au moins du facteur de 1,2 supérieure à la distance (unique) (S₂₂) à parcourir par le dispositif d'impression (5) à travers le deuxième espace de construction (B2) le long de la deuxième direction (H₂), et/ou
le premier dispositif de revêtement (3) et le deuxième dispositif de revêtement (13) sont chacun configurés comme des dispositifs de revêtement bidirectionnels, et/ou dans laquelle le dispositif d'impression (5) est configuré comme un dispositif d'impression bidirectionnel.

3. Imprimante 3D (10) selon la revendication 1 ou 2, dans laquelle
le premier espace de construction (B1) et le deuxième espace de construction (B2) ont sensiblement la même forme et la même taille, et/ou
le premier espace de construction (B1) et le deuxième espace de construction (B2) sont disposés l'un après l'autre, vus dans la deuxième direction (H2), et/ou
le premier espace de construction (B1) et le deuxième espace de construction (B2) sont chacun formés de manière à être rectangulaires, par exemple avec deux côtés longs et deux côtés courts, les premier et deuxième espaces de construction (B1, B2) étant disposés avec deux côtés longs adjacents l'un à l'autre et/ou la première direction (H₁) et la troisième direction (H₃) étant sensiblement parallèles aux côtés longs du premier espace de construction et aux côtés longs du deuxième espace de construction, respectivement, et/ou
une zone de distribution d'une tête d'impression (7) du dispositif d'impression est allongée dans une direction perpendiculaire à la deuxième direction (H₂) et/ou dans la première direction (H₁), et/ou
une zone de distribution de la tête d'impression (7) dans une direction perpendiculaire à la deuxième direction (H₂) et/ou dans la première direction (H₁) est plus courte que le premier espace de construction (B1) et/ou plus courte que la distance (S₁) à parcourir par le premier dispositif de revêtement (3), par exemple sensiblement la moitié ou moins, et/ou
dans laquelle une distance unique (S₂₁) à parcourir par le dispositif d'impression (5) à travers le premier espace de construction (B1) le long de la deuxième direction (H₂) est de 1,0 m à 1,4 m, par exemple 1,2 m, et/ou
dans laquelle une distance unique (S₂₂) à parcourir par le dispositif d'impression (5) à travers le deuxième espace de construction (B2) le long de la deuxième direction (H₂) est de 1,0 m à 1,4 m, par exemple 1,2 m, et/ou
le dispositif de commande (C) est configuré pour déplacer le premier dispositif de revêtement (3), le deuxième dispositif de revêtement (13) et le dispositif d'impression commun (5), par exemple la tête d'impression (7), à partir d'un premier côté commun - vu dans les première et troisième directions - à travers les premier et deuxième espaces de construction vers un deuxième côté opposé - vu dans les première et troisième directions - distribuant ainsi un matériau particulaire et/ou un agent de traitement capable de couler, et dans laquelle, éventuellement, ensuite, le premier dispositif de revêtement (3), le deuxième dispositif de revêtement (13) et le dispositif d'impression commun (5), par exemple la tête d'impression (7), sont déplacés à partir du deuxième côté pour revenir au premier côté, en distribuant ainsi à nouveau un matériau particulaire et/ou un agent de traitement capable de couler.

4. Imprimante 3D (10) selon l'une quelconque des revendications 1 à 3,
comprenant en outre un troisième espace de construction (B3) disposé de manière adjacente au deuxième espace de construction (B2), et un troisième dispositif de revêtement (23) assigné au troisième espace de construction (B3) et déplaçable le long d'une quatrième direction (H₄) sensiblement parallèle à la première direction (H₁) à travers le troisième espace de construction (B3) afin d'alimenter le troisième espace de construction (B3) en matériau de construction sous la forme d'une couche de matériau de construction uniforme du matériau de construction à solidifier,
dans laquelle l'imprimante 3D est configurée pour construire un ou plusieurs composants tridimensionnels en couches dans le troisième espace de construction (B3),
dans laquelle le dispositif d'impression commun (5) est déplaçable dans la deuxième direction (H2) à travers le troisième espace de construction (B3) afin de distribuer d'une manière contrôlée un agent de traitement capable de couler sur une zone partielle d'une couche de matériau de construction précédemment appliquée du troisième espace de construction (B3),
dans laquelle une zone de distribution du troisième dispositif de revêtement (23) recouvre complètement le troisième espace de construction (B3) dans une direction perpendiculaire à la quatrième direction (H₄),
dans laquelle une distance à parcourir par le troisième dispositif de revêtement (23) à travers le troisième espace de construction (B3) le long de la quatrième direction (H4) est supérieure ou égale à une distance (unique) à parcourir par le dispositif d'impression (5) à travers le troisième espace de construction (B3) le long de la deuxième direction (H₂), et
dans laquelle le dispositif de commande (C) est configuré pour commander le premier dispositif de revêtement (3), le deuxième dispositif de revêtement (13), le troisième dispositif de revêtement (23) et le dispositif d'impression commun (5) de sorte qu'un déplacement respectif des dispositifs de revêtement à travers l'espace de construction associé chevauche dans le temps le déplacement du dispositif d'impression commun (5) dans la deuxième direction (H₂) à travers au moins l'un des espaces de construction (2, 12, 23), et/ou que l'alimentation de l'espace de construction respectif en matériau de construction par le dispositif de revêtement associé chevauche dans le temps la distribution contrôlée d'un agent de traitement capable de couler sur une couche de matériau de construction précédemment appliquée d'au moins un des espaces de construction (2, 12, 23).

5. Procédé de fabrication génératif pour la production d'au moins un composant tridimensionnel, par exemple un moule ou un noyau de fonderie, dans un premier espace de construction (B1) d'une imprimante 3D et d'au moins un composant tridimensionnel, par exemple un moule ou un noyau de fonderie, dans un deuxième espace de construction (B2) de l'imprimante 3D qui est disposé de manière adjacente au premier espace de construction (B1), comprenant :
la formation de couches de matériau de construction particulaire superposées, par exemple contenant des particules de sable, dans le premier espace de construction (B1) en utilisant un premier dispositif de revêtement (3) qui est déplacé à travers le premier espace de construction (B1) dans une première direction (H₁) pour appliquer une couche respective,
la formation de couches de matériau de construction particulaire superposées, par exemple contenant des particules de sable, dans le deuxième espace de construction (B2) en utilisant un deuxième dispositif de revêtement (3) qui est déplacé à travers le deuxième espace de construction (B2) dans une troisième direction (H₃) sensiblement parallèle à la première direction pour appliquer une couche respective, et
l'impression sélective de plusieurs couches de matériau de construction adjacentes dans une zone partielle respective de celles-ci dans le premier espace de construction (B1) et l'impression sélective de plusieurs couches de matériau de construction adjacentes dans une zone partielle respective de celles-ci dans le deuxième espace de construction (B2) en utilisant un dispositif d'impression commun (5) qui est déplacé à travers le premier espace de construction (B1) et le deuxième espace de construction (B2) dans une deuxième direction (H₂) qui est disposée à un angle par rapport aux première et troisième directions (H₁, H₃) afin de distribuer de manière contrôlée un agent de traitement capable de couler sur une zone partielle d'une couche de matériau de construction précédemment appliquée dans le premier espace de construction (B1) et sur une zone partielle d'une couche de matériau de construction précédemment appliquée dans le deuxième espace de construction (B2), lequel agent de traitement contribue à une solidification sélective de la couche de matériau de construction respective,
dans lequel une zone de distribution du premier dispositif de revêtement (3) recouvre complètement le premier espace de construction (B1) dans une direction perpendiculaire à la première direction (H₁),
dans lequel une zone de distribution du deuxième dispositif de revêtement (13) recouvre complètement le deuxième espace de construction (B2) dans une direction perpendiculaire à la troisième direction (H₃),
dans lequel une distance (S₁) parcourue par le premier dispositif de revêtement (3) à travers le premier espace de construction (B1) le long de la première direction (H₁) est supérieure ou égale à une distance (unique) (S₂₁) parcourue par le dispositif d'impression (5) à travers le premier espace de construction (B1) le long de la deuxième direction (H₂),
dans lequel une distance (S₃) parcourue par le deuxième dispositif de revêtement (13) à travers le deuxième espace de construction (B2) le long de la troisième direction (H₃) est supérieure ou égale à une distance (unique) (S₂₂) parcourue par le dispositif d'impression (5) à travers le deuxième espace de construction (B2) le long de la deuxième direction (H₂), et
dans lequel un déplacement du premier dispositif de revêtement (3) dans la première direction (H₁) à travers le premier espace de construction (B1) et un déplacement du deuxième dispositif de revêtement (13) dans la troisième direction (H₃) à travers le deuxième espace de construction (B2) sont effectués de manière à chevaucher dans le temps au moins l'un d'un déplacement du dispositif d'impression commun (5) dans la deuxième direction (H₂) à travers le premier espace de construction (B1) et d'un déplacement du dispositif d'impression commun (5) dans la deuxième direction (H₂) à travers le deuxième espace de construction (B2), et/ou l'alimentation du premier espace de construction (B1) en matériau de construction par le premier dispositif de revêtement (3) et l'alimentation du deuxième espace de construction (B2) en matériau de construction par le deuxième dispositif de revêtement (13) sont effectuées de manière à chevaucher dans le temps la distribution contrôlée d'un agent de traitement capable de couler sur une couche de matériau de construction précédemment appliquée d'au moins l'un du premier espace de construction (B1) et du deuxième espace de construction (B2).

6. Procédé de fabrication génératif selon la revendication 5, dans lequel
le dispositif d'impression commun (5) comprend une tête d'impression commune (7) déplaçable dans la première direction (H₁), et la tête d'impression commune est déplacée plusieurs fois dans la deuxième direction (H₂) à travers les premier et deuxième espaces de construction (B1, B2) pour l'impression sélective d'une couche de matériau de construction du premier espace de construction (B1) et d'une couche de matériau de construction du deuxième espace de construction (B2), par exemple de telle sorte que la tête d'impression (7) se déplace dans l'ensemble en forme de méandres à travers les premier et deuxième espaces de construction (B1, B2), par exemple le long d'une trajectoire en forme de U ou d'une trajectoire en forme de S, et/ou
la distance (S₁) parcourue par le premier dispositif de revêtement (3) à travers le premier espace de construction (B1) le long de la première direction (H₁) est au moins du facteur de 1,2 supérieure à la distance (unique) (S₂₁) parcourue par le dispositif d'impression (5) à travers le premier espace de construction (B1) le long de la deuxième direction (H₂), et/ou
la distance (S₃) parcourue par le deuxième dispositif de revêtement (13) à travers le deuxième espace de construction (B2) le long de la troisième direction (H₃) est au moins du facteur de 1,2 supérieure à la distance (unique) (S₂₂) parcourue par le dispositif d'impression (5) à travers le deuxième espace de construction (B2) le long de la deuxième direction (H₂), et/ou
le premier dispositif de revêtement (3) et le deuxième dispositif de revêtement (13) sont chacun exploités comme des dispositifs de revêtement bidirectionnels et/ou dans lequel le dispositif d'impression (5) est exploité comme un dispositif d'impression bidirectionnel, et/ou
le premier espace de construction (B1) et le deuxième espace de construction (B2) ont sensiblement la même forme et la même taille, et/ou
le premier espace de construction (B1) et le deuxième espace de construction (B2) sont disposés l'un après l'autre, vus dans la deuxième direction (H2), et/ou
le premier espace de construction (B1) et le deuxième espace de construction (B2) sont chacun formés de manière à être rectangulaires, par exemple avec deux côtés longs et deux côtés courts, les premier et deuxième espaces de construction (B1, B2) étant disposés avec deux côtés longs adjacents l'un à l'autre et/ou la première direction (H₁) et la troisième direction (H₃) étant sensiblement parallèles aux côtés longs des premier et deuxième espaces de construction (B1, B2), et/ou
une zone de distribution d'une tête d'impression (7) du dispositif d'impression est allongée dans une direction perpendiculaire à la deuxième direction (H₂) et/ou dans la première direction (H₁), et/ou
une zone de distribution de la tête d'impression (7) dans une direction perpendiculaire à la deuxième direction (H₂) et/ou dans la première direction (H₁) est plus courte que le premier espace de construction (B1) et/ou plus courte que la distance (S₁) à parcourir par le premier dispositif de revêtement (3), par exemple sensiblement la moitié ou moins, et/ou
dans lequel une distance unique (S₂₁) à parcourir par le dispositif d'impression (5) à travers le premier espace de construction (B1) le long de la deuxième direction (H₂) est de 1,0 m à 1,4 m, par exemple 1,2 m, et/ou
dans lequel une distance unique (S₂₂) à parcourir par le dispositif d'impression (5) à travers le deuxième espace de construction (B2) le long de la deuxième direction (H₂) est de 1,0 m à 1,4 m, par exemple 1,2 m, et/ou
le premier dispositif de revêtement (3), le deuxième dispositif de revêtement (13) et la tête d'impression (7) sont déplacés à partir d'un premier côté commun - vu dans les première et troisième directions - à travers les premier et deuxième espaces de construction vers un deuxième côté opposé - vu dans les première et troisième directions - distribuant ainsi un matériau particulaire et un agent de traitement capable de couler, respectivement, et dans lequel, éventuellement, ensuite, le premier dispositif de revêtement (3), le deuxième dispositif de revêtement (13) et la tête d'impression (7) sont déplacés à partir du deuxième côté pour revenir au premier côté, en distribuant ainsi à nouveau un matériau particulaire et/ou un agent de traitement capable de couler.
